# FASCICULE DE BREVET EUROPEEN

(11) **EP 3 986 130 B1**
(45) Date de publication et mention de la délivrance du brevet: **24.04.2024**
(21) Numéro de dépôt: 20747019.6
(22) Date de dépôt: 22.06.2020
(51) Int. Cl.: A01N 31/04, A01N 37/02, A01P 13/00, A01N 37/40, A01N 37/46, A01N 37/10

(54) **UTILISATION DE L'ALCOOL BENZYLIQUE COMME HERBICIDE**
VERWENDUNG VON BENZYLALKOHOL ALS HERBIZID
USE OF BENZYL ALCOHOL AS A HERBICIDE

(30) Priorité: 20.06.2019 FR 1906692
(43) Date de publication de la demande: 27.04.2022
(73) Titulaire: INNOVI, 47390 Layrac (FR)
(72) Inventeur: FREGONESE, Alexandra, 47310 MONCAUT (FR); EVEILLARD, Alexandre, 47310 MOIRAX (FR)
(74) Mandataire: Santarelli
(86) Numéro de dépôt international: PCT/FR2020/051084
(87) Numéro de publication internationale: WO 2020/254776

(56) Documents cités:
- WO-A1-00/51436
- WO-A1-01/41569
- WO-A1-2012/167815
- US-A- 3 879 191
- R. A. I. NORVAL ET AL: "Responses of the ticksAmblyomma hebraeum andA. variegatum to known or potential components of the aggregation-attachment pheromone. III. Aggregation", EXPERIMENTAL AND APPLIED ACAROLOGY., vol. 16, no. 3, 1 décembre 1992 (1992-12-01), pages 237-245, XP055646148, GB ISSN: 0168-8162, DOI: 10.1007/BF01193806

## Description

L'invention concerne l'utilisation de l'alcool benzylique comme herbicide, en particulier comme herbicide systémique.

Les pesticides sont des substances chimiques naturelles ou de synthèse utilisées en agriculture pour contrôler les différentes sortes de nuisibles (maladies, ravageurs et plantes nuisibles) à l'exception des produits à usage médical et vétérinaire.

Parmi les pesticides, on distingue les herbicides.

Les pesticides sont destinés à protéger les cultures contre les insectes, les maladies et les mauvaises herbes. Ils sont utilisés en agriculture, pour détruire ou combattre les ennemis des cultures ou pour les traitements des produits stockés tels que :
- les semences ou les céréales conservées dans les silos qui peuvent être altérés par des moisissures, des champignons ou encore détruits par certains insectes ;
- les fruits dont la conservation doit garantir les qualités sanitaires, gustatives et organoleptiques ;
- en sylviculture lors de la production du bois pour limiter l'action des insectes et champignons,
- lors d'actions de désherbage pour préparer le terrain forestier, dégager les conifères, par exemple, ou encore détruire toute espèce nuisible au développement d'essences forestières ;
- le stockage du bois avant commercialisation et utilisation nécessite également l'emploi de fongicides et d'insecticides pour limiter toute altération ;
- pour le désherbage des zones non cultivées, des voies ferrées, des clôtures, des lignes de transport de l'énergie, des allées de jardins publics, des pelouses ou encore des abords des plans d'eau de loisirs ;
- pour le désherbage des zones cultivées ;
- pour le défanage, à savoir la destruction partielle ou totale des tiges et des feuilles des tubercules (tels que pomme de terre, betterave, etc.) en vue de faciliter la récolte mécanisée à l'aide d'arracheuses et d'améliorer la qualité des tubercules (conservation, protection des maladies) ou limiter leur taille.

On entend par « pesticide » une substance utilisée pour neutraliser ou détruire un ravageur, un vecteur de maladie humaine ou animale, une espèce végétale ou animale nocive ou gênante au cours de la production ou de l'entreposage de produits agricoles.

On entend par « herbicide » une substance utilisée, notamment, pour neutraliser ou détruire une espèce végétale nocive ou gênante au cours de la production ou de l'entreposage de produits agricoles, ou dans les applications mentionnées ci-dessus qui ne font pas intervenir l'action nocive d'un ravageur animal ou d'un microorganisme.

En particulier, un herbicide peut être utilisé pour éliminer des végétaux nuisibles ou non désirés de certaines zones ou terrains cultivé(e)s ou non, notamment pour le désherbage des zones cultivées (notamment en inter-culture), des zones non cultivées, des voies ferrées, des clôtures, des lignes de transport de l'énergie, des allées de jardins publics, des pelouses ou encore des abords des plans d'eau de loisirs, etc., ou encore pour le défanage.

Les herbicides perturbent le fonctionnement de la physiologie de la plante, sa croissance et/ou la biosynthèse des constituants cellulaires.

Les herbicides représentent 40% des pesticides utilisés en agriculture et actuellement, l'inhibition de la photosynthèse est l'un des modes d'action les plus courants de ces matières actives.

L'utilisation d'herbicides peut également être réalisée en complément ou en remplacement des actions de débardages des berges de plans d'eau, carrières, etc. pour le traitement de bâtiments d'élevage, de matériel de stockage et de transport d'animaux, de matériel de laiterie, etc.

Dans la présente description, on utilisera indifféremment les termes « végétal » ou « plante ». On entend par « plante nuisible » ou « plante non désirée » ou « plante indésirable » une plante dont la pousse ou la croissance n'est pas souhaitée, et que l'on souhaite détruire ou dont on souhaite limiter le développement, notamment les plantes communément appelées « mauvaise herbe » ou « plante adventice ».

La Commission des essais biologiques (CEB) de l'Association française de protection des plantes classe les herbicides selon leur mode de pénétration, le type de migration via les organes de distribution de la plante et la sélectivité vis-à-vis des plantes.

Ainsi, sur le plan du mode de pénétration, on distingue :
- les herbicides à pénétration par le sol : ils pénètrent par les organes souterrains des végétaux (racines, graines, plantules). On les utilise en traitement herbicide de pré-levée, effectué sur la graine avant la levée de la plante considérée (plante cultivée ou plante nuisible), et en herbicide préventif sur des zones dépourvues de végétaux mais concernées par la présence habituelle d'adventices ; et
- les herbicides à pénétration foliaire : appliqués sur le feuillage, ils pénètrent par les organes aériens des végétaux (feuilles, pétioles, tiges). On les utilise en traitement herbicide de post-levée, effectué après la levée de la plante considérée (plante cultivée ou plante nuisible).

Les herbicides peuvent agir via l'un ou l'autre de ces modes de pénétration, ou les deux.

Sur le plan de la migration via les organes de distribution de la plante, on distingue :
- les herbicides de contact, qui agissent après pénétration plus ou moins profonde dans les tissus, sans aucune migration d'un organe à un autre de la plante traitée ; et
- les herbicides systémiques, capables d'agir après pénétration et/ou migration d'un organe à un autre de la plante traitée.

Sur le plan de la sélectivité, on distingue :
- les herbicides sélectifs qui détruisent une ou plusieurs espèces identifiées, qu'elles soient cultivables ou non, sans affecter les autres espèces, qu'elles soient cultivables ou non ;
- les herbicides totaux ou non-sélectifs, qui, lorsqu'ils sont utilisés aux doses conseillées, sont susceptibles de détruire ou d'empêcher le développement de tous les végétaux, avec des persistances d'action variables.

Les mauvaises herbes peuvent engendrer des pertes de rendement atteignant entre un tiers et la moitié de la récolte. Mais l'utilisation systématique des herbicides a des limites et la sélection de mécanismes de résistance aux herbicides dans les populations adventices est préoccupante.

L'utilisation d'herbicides est nécessaire pour éviter que les mauvaises herbes entrent en compétition avec les plantes cultivées pour l'exploitation des ressources du milieu : lumière, eau, éléments nutritifs, espace En parallèle au problème d'efficacité de la lutte chimique contre les adventices, l'agriculture est soumise à de nouvelles contraintes environnementales et écologiques visant à diminuer l'usage des pesticides. Or, en appliquant des doses d'herbicides inférieures à celles recommandées, on augmente le risque de sélectionner une résistance.

Cependant, alors que le nombre de substances actives autorisées diminue, notamment sur le territoire français, peu de nouveaux produits sont commercialisés. Les produits restants sur le marché pour lutter contre les végétaux nuisibles ou non désirés sont donc utilisés de manière de plus en plus récurrente aggravant le risque de sélection de résistance, notamment en modifiant la fréquence des individus résistants et sensibles dans une population.

En effet, lorsqu'un herbicide est appliqué de manière répétée, les individus sensibles sont tués, ce qui confère aux individus résistants un très fort avantage sélectif qui leur permet de proliférer. Au bout d'un nombre variable d'années la fréquence des individus résistants devient préoccupante. Différents facteurs liés à l'espèce adventice et aux caractéristiques de l'herbicide favorisent l'évolution de la résistance.

Il est donc recherché de disposer d'un herbicide qui agisse, non seulement par contact, mais également par voie systémique. Il est également recherché que cet herbicide soit, de préférence, non sélectif, afin qu'il soit efficace quelle que soit la famille et/ou l'espèce végétale à éliminer. Egalement, il est souhaité que son utilisation permette de limiter l'apparition des phénomènes de résistance aux herbicides. Enfin, on recherche un herbicide qui présente un faible niveau de toxicité vis-à-vis de l'homme et de l'environnement.

On a maintenant trouvé que l'alcool benzylique présentait les propriétés herbicides souhaitées, en particulier sur le plan de l'efficacité et de la réduction des phénomènes de résistance, du caractère systémique et de la non-sélectivité.

On a également trouvé que l'alcool benzylique ne présentait aucune activité corrosive des métaux, ce qui présente un avantage pour l'utilisation de matériel agricole, de jardinage etc.

L'alcool benzylique est produit naturellement par de nombreuses plantes, comme l'Ylang-Ylang, le jasmin, l'abricot, l'amande ou le cassis. On le trouve également dans une variété d'huiles essentielles. Également appelé hydroxytoluène ou toluènol, l'alcool benzylique peut être préparé industriellement de multiples manières. Il peut être d'origine végétale ou synthétique

C'est un conservateur autorisé par Ecocert, organisme français de contrôle et de certification des produits biologiques. Il est formé par l'action de l'hydroxyde de potassium sur le benzaldéhyde qui est l'aldéhyde aromatique le plus simple. Les aldéhydes aromatiques utilisés aux doses conseillées ne présentent pas de toxicité connue à ce jour. L'alcool benzylique est utilisé comme solvant polyvalent, comme précurseur de plusieurs esters et dans la fabrication des savons. Il rentre dans la composition de plus de 20% des produits cosmétiques. En tant qu'additif alimentaire, l'alcool benzylique est classé « généralement reconnu inoffensif » (GRAS, pour « generally regarded as safe ») par l'organisme américain FDA (Food and Drug Administration).

L'alcool benzylique peut également être utilisé comme solvant dans des compositions herbicides, comme décrit, par exemple dans les demandes WO2014/0660557 et WO2008/017378.

L'utilisation comme qu'antioxydant d'un dérivé d'alcool benzylique, l'hydroxytoluène butylé (BHT) dans une composition pesticide ou herbicide est également décrite, par exemple, dans les demandes WO01/26457 et WO2006/052228.

Le brevet US3879191 concerne des dérivés d'alcools benzyliques substitués ayant des structures chimiques très éloignées de l'alcool benzylique, de par leur nombre d'atomes de carbone et d'hydrogène.

Les composés testés dans les exemples sont mis en oeuvre dans des mélanges de solvants eux-mêmes très toxiques (acétone, méthanol, DMF). De plus, les tests réalisés montrent une activité mesurée par des lésions, révélatrice d'une activité défoliante et non herbicide.

La demande WO00/51436 décrit des compositions défoliantes contenant des huiles essentielles et leurs mélanges. L'exemple 3 décrit l'application topique d'un mélange pour aérosol d'huiles essentielles végétales consistant en eugénol, propionate de 2-phénétyle, alcool benzylique et essence de menthe poivrée sur différentes plantes ou sur des chênes, pour éliminer les matières vertes. Ce test ne permet pas d'attribuer une activité à l'alcool benzylique parmi les autres composés du mélange.

Cependant, l'activité herbicide de l'alcool benzylique n'est ni décrite, ni suggérée dans l'état de la technique.

Selon un premier aspect, l'invention a donc pour objet l'utilisation de l'alcool benzylique comme herbicide. L'alcool benzylique peut être la seule substance active ou être utilisé en combinaison avec au moins un co-herbicide. Des exemples de co-herbicides, non limitatifs, sont cités plus loin.

Dans la présente description, on utilisera indifféremment les expressions « en combinaison avec un co-herbicide » et « en association avec un co-herbicide ». Selon l'invention, l'alcool benzylique peut être utilisé, notamment, dans toutes les actions de désherbage et de défanage mentionnées plus haut. Avantageusement, l'activité herbicide de l'alcool benzylique est systémique. L'invention a donc pour objet, selon un de ses aspects, l'utilisation de l'alcool benzylique comme herbicide systémique.

L'utilisation de l'alcool benzylique comme herbicide, en particulier comme herbicide systémique, a pour objet le contrôle des plantes nuisibles ou indésirables.

Comme rappelé plus haut, un herbicide systémique est capable d'agir après pénétration et/ou migration d'un organe à un autre de la plante traitée.

La systémie fait appel à la circulation de la sève, grâce à un processus continu dans les organes de la plante.

La circulation de la sève est principalement causée par l'évapotranspiration végétale, qui se produit essentiellement au niveau des stomates. L'évapotranspiration est le processus continu causé par l'évaporation d'eau par les feuilles et la reprise correspondante à partir des racines dans le sol. Ainsi, l'évapotranspiration végétale et la circulation de la sève sont des mécanismes physiologiques de la plante vivante et enracinée.

Selon un autre aspect de l'invention, l'activité herbicide de l'alcool benzylique est à pénétration aérienne (foliaire) et/ou souterraine (racines et/ou graines). Ainsi, l'activité herbicide de l'alcool benzylique s'exerce par pénétration via les parties aériennes et/ou souterraines de la plante. Cette activité permet d'empêcher la germination, dans une utilisation préventive, mais également d'empêcher la repousse de plantes issues de graines, après traitement de la zone.

Avantageusement, l'activité herbicide de l'alcool benzylique peut également être préventive en empêchant la germination des graines de végétaux nuisibles ou indésirables ou leur pré-émergence, par arrosage des zones dépourvues de végétaux mais habituellement concernées par la présence d'adventices. L'application se fera avant leur apparition. L'activité herbicide de l'alcool benzylique peut également être préventive en pré-levée en traitant la surface d'une zone cultivée préalablement semée en profondeur.

Selon un aspect de l'invention, l'activité herbicide préventive est réalisée par arrosage de zones contenant des graines.

De manière avantageuse, l'activité herbicide de l'alcool benzylique est non sélective, c'est-à-dire qu'elle agit, à des doses variables, sur toutes les espèces.

Selon l'invention, les plantes nuisibles ou non désirées sont choisies parmi l'ensemble des plantes de la lignée verte (ou Archaeplastida), et plus particulièrement sur les plantes monocotylédones, les plantes dicotylédones et les ptéridophytes, telles que, par exemple, celles mentionnées ci-dessous.

Le dosage d'alcool benzylique (quantité par hectare) permettant d'obtenir l'activité herbicide souhaitée peut être adapté en fonction des plantes nuisibles ou indésirables à traiter et du mode d'application.

Le dosage préconisé pour une application en foliaire ou une application systémique est variable en fonction de la hauteur du végétal, de sa densité sur une surface donnée, du nombre de variétés présentent sur la zone à traiter et du type de végétaux.

On utilisera notamment l'alcool benzylique, seul ou en combinaison avec au moins un co-herbicide, à raison de 5L/hectare à 800L/hectare, de préférence de 50L/hectare à 500L/hectare, en particulier de 50L/hectare à 300L/hectare, par exemple, de 100 à 200L/hectare.

Selon un aspect avantageux, l'alcool benzylique, seul ou en combinaison avec au moins un co-herbicide peut être utilisé à raison de de 5L/hectare à 100L/hectare, par exemple de 10 L/hectare à 80 L/hectare, notamment de 15L/hectare à 60L/hectare. Les concentrations élevées seront privilégiées pour les végétaux avec une racine traçante et les graminées.

L'alcool benzylique peut être utilisé pur ou dilué, par exemple dilué dans l'eau ou dans un autre véhicule liquide, ou sous forme de poudre, granulés etc., la formulation étant choisie suivant l'utilisation souhaitée et la quantité à mettre en oeuvre.

Dans le cadre de la présente invention, l'alcool benzylique peut être utilisé en pré- ou post-émergence, sur la graine, la plantule (stade juvénile antérieur à la floraison), la plante en cours de floraison (avant, pendant ou après pollinisation), la plante après fécondation, la plante en cours de fructification, le fruit, les fleurs, les feuilles, les tiges, les racines ou dans le sol, et/ou le milieu de culture, avant ou après semis ou encore en interculture ou en inter-rangs. Par « émergence », on entend la levée d'une plantule du sol.

Par « interculture », on entend une période comprise entre deux cultures principales, qui débute à la récolte de la culture précédente et se termine au semis de la culture suivante.

Par « inter-rang », on entend une zone entre deux rangs de plantes cultivées.

Il est possible de traiter des végétaux cultivés en plein champ ou des végétaux sous serre ou encore des végétaux cultivés en hors sol.

L'alcool benzylique peut être appliqué par pulvérisation, arrosage, ou dispersion de poudre ou de granulés.

Dans le cas d'une application en pré-émergence (également appelée « pré-levée ») l'application par pulvérisation permet d'obtenir une forte concentration de produit actif dans la couche supérieure du sol. Cette concentration est particulièrement efficace contre les mauvaises herbes à germination peu profonde qui proviennent de ces couches, sans impacter les graines de plantes non indésirables éventuellement présentes en profondeur.

Avantageusement, l'application de l'alcool benzylique en pré-levée peut être effectuée sur un sol humide, ce qui permet d'utiliser une moins grande quantité d'eau ou de solvant pour le mouillage de la zone à traiter.

Dans la présente invention, on entend par « contrôler », une réduction de la croissance des plantes nuisibles en comparaison avec des plantes nuisibles non traitées.

De manière préférée, la croissance des plantes nuisibles ou indésirables est réduite d'au moins 50%, en particulier d'au moins 60%, de préférence d'au moins 80%, et tout particulièrement de 90 à 100%.

Les plantes nuisibles ou indésirables pouvant être traitées avec l'alcool benzylique herbicide conforme à l'invention peuvent être des plantes de la lignée verte ou Archaeplastida, et plus particulièrement des monocotylédones ou dicotylédones, ou encore des ptéridophytes.

Parmi les plantes monocotylédones, on peut citer, notamment, les graminées et les chiendents.

Parmi les plantes dicotylédones, on peut citer, notamment, les Herbacées, les Légumineuses, tel que le trèfle, les Rosacées, telles que les ronces, ou les Astéracées, tels que les chardons.

Parmi les ptéridophytes, on peut citer, par exemple, les fougères ou les prêles. A titre d'exemple de plante monocotylédone nuisible qui peut être traitée, on peut citer celles appartenant au genre Hordeum spp., Echinochloa spp., Poa spp. Bromus spp., Digitaria spp., Eriochloa spp., Setaria spp., Pennisetum spp., Eleusine spp., Eragrostis spp., Panicum spp., Lolium spp., Brachiaria spp., Leptochloa spp., Avena spp., Cyperus spp., Axonopris spp., Sorghum spp. et Melinus spp..

Des exemples particuliers de plantes monocotylédones nuisibles sur lesquelles les combinaisons et compositions herbicides selon la présente invention agissent efficacement sont choisies parmi les espèces suivantes *Hordeum murinum, Echinochloa crus-galli, Poa annua, Bromus rubens L., Bromus rigidus, Bromus secalinus L., Digitaria sanguinalis, Eriochloa gracilis, Setaria faberi, Setaria viridis, Pennisetum glaucum, Eleusine indica, Eragrostis pectinacea, Panicum miliaceum, Lolium multiflorum, Brachiaria platyphylla, Leptochloa fusca, Avena fatua, Cyperus compressus, Cyperus esculentes, Axonopris offinis*, *Sorghum halapense,* et *Melinus repens.*

A titre d'exemple de plantes dicotylédones sur lesquelles les combinaisons et compositions herbicides selon la présente invention agissent efficacement, on peut citer celles appartenant au genre Amaranthus spp., Polygonum spp., Medicago spp., Mollugo spp., Cyclospermum spp., Stellaria spp., Gnaphalium spp., Taraxacum spp., Oenothera spp., Amsinckia spp., Erodium spp., Erigeron spp., Senecio spp., Lamium spp., Kochia spp., Chenopodium spp., Lactuca spp., Malva spp., Ipomoea spp., Brassica spp., Sinapis spp., Urtica spp., Sida spp., Portulaca spp., Richardia spp., Ambrosia spp., Calandrinia spp., Sisymbrium spp., Sesbania spp., Capsella spp., Sonchus spp., Euphorbia spp., Helianthus spp., Coronopus spp., Salsola spp., Abutilon spp., Vicia spp., Epilobium spp., Cardamine spp., Picris spp., Trifolium spp., Galinsoga spp., Epimedium spp., Marchantia spp., Solanum spp., Oxalis spp., Metricaria spp., Plantago spp., Tribulus spp., Cenchrus spp., Bidens spp., Veronica spp., et Hypochaeris spp..

Des exemples particuliers de plantes dicotylédones nuisibles sur lesquelles les combinaisons et compositions herbicides selon la présente invention agissent efficacement sont choisies parmi les espèces suivantes *Amaranthus spinosus*, *Polygonum convolvulus, Medicago polymorpha*, *Mollugo verticillata, Cyclospermum leptophyllum*, *Stellaria media, Gnaphalium purpureum*, *Taraxacum officinale, Oenothera laciniata, Amsinckia intermedia, Erodium cicutarium, Erodium moschatum, Erigeron bonariensis, Senecio vulgaris, Lamium amplexicaule*, *Erigeron canadensis, Polygonum aviculare, Kochia scoparia*, *Chenopodium album, Lactuca serriola*, *Malva parvijlora, Malva neglecta, Ipomoea hederacea, Ipomoea lacunose, Brassica nigra, Sinapis arvensis, Urtica dioica, Amaranthus blitoides, Amaranthus retroflexus, Amaranthus hybridus, Amaranthus lividus, Sida spinosa*, *Portulaca oleracea, Richardia scabra, Ambrosia artemisiifolia, Calandrinia caulescens, Sisymbrium irio, Sesbania exaltata, Capsella bursa-pastoris, Sonchus oleraceus, Euphorbia maculate, Helianthus annuus, Coronopus didymus, Salsola tragus, Abutilon theophrasti, Vicia benghalensis L., Epilobium paniculatum, Cardamine* spp, *Picris echioides, Trifolium* spp., *Galinsoga* spp., *Epimedium* spp., *Marchantia* spp., *Solanum* spp., *Oxalis* spp., *Metricaria matriccarioides, Plantago* spp., *Tribulus terrestris, Salsola kali, Cenchrus* spp. *Bidens bipinnata, Veronica* spp., and *Hypochaeris radicata.*

L'alcool benzylique peut être utilisé comme herbicide seul ou en association avec un co-herbicide.

Dans ce cas, l'utilisation de l'alcool benzylique et du co-herbicide peut être simultanée ou séquentielle pour accroître l'efficacité de ce dernier et/ou réduire sa concentration en vue de diminuer sa toxicité.

Ledit co-herbicide peut être choisi parmi un ou plusieurs composé(s) herbicides(s), ou, alternativement, un ou plusieurs composé(s) qui ne possède(nt) pas d'activité herbicide, mais qui est(sont) susceptible(s) d'accroitre et /ou de rendre plus rapide l'activité herbicide de l'alcool benzylique (par exemple, par la réduction des quantités de matière active à mettre en oeuvre et/ou par la réduction du temps d'action).

En particulier, ledit co-herbicide peut être choisi parmi les composés participant à la production de dérivés réactifs de l'oxygène (en anglais « ROS » pour « Reactive Oxygen Species »), tels que, par exemple, l'acide salicylique, ou les composés agissant sur la membrane plasmique, entrainant sa rupture ou sa fluidification, comme les enzymes, notamment le lysozyme, l'alcool phénéthylique ou l'EDTA.

Ledit co-herbicide peut être, par exemple, un inhibiteur de la synthèse moléculaire, tel que, par exemple les inhibiteurs de synthèse de pigments, les inhibiteurs de la synthèse de cellulose (benzamides, alkylazines, nitriles ou triazolocarboxamides), les inhibiteurs du transport des auxines (semicarbazone, phtalamate), les inhibiteurs de la voie de l'acide shikimique (glyphosate), les inhibiteurs de la synthèse des auxines ou herbicides auxiniques, tels que, par exemple, les dérivés d'acides phénoxy-alcanoïques, en particulier les acides phénoxy-carboxyliques tels que le 2,4D (acide 2,4-dicholorophénoxyacétique), les acides phénoxy-2-propioniques ou les acides phénoxy-butyriques, ou l'acide benzoïque et ses dérivés, tels que le dicamba ou le benzoate de sodium, les dérivés d'acides pyridiniques, tels que, par exmple, le fluoxypyr, le triclopyr ou le clopyralide, les dérivés d'acides quinoline-carboxyliques ou les dérivés d'acides pyrimidine-carboxyliques, les inhibiteurs de la division cellulaire (acétamides, oxyacétamides, tétrazolines, chloroactamides), les inhibiteurs d'acétolactate synthase (ALS), les inhibiteurs de la 4-hydroxyphénylpyruvate dioxygénase (4-HPPD,) les inhibiteurs de la phytoène désaturase (PDS), les inhibiteurs de la 1-désoxy-D-xylulose-5-phosphate-synthase (DOXP), les inhibiteurs de l'Acétyl-coenzyme A carboxylase (ACCase) ou les inhibiteurs de du photosytème II (PS II)(urée, nitriles, etc), ou des molécules dont le mode d'action n'est pas défini (acide pélargonique, vinaigre).

Le co-herbicide peut être, par exemple, choisi parmi l'un des composés herbicides suivants : acétochlore, acifluorfène, aclonifène, acroléine, alachlore, allidochlore, alloxydime, alcool allylique, alorac, amétridione, ametryn, amibuzine, amicarbazone, amidosulfuron, aminocyclopyrachlore, aminopyralide, amiprofos-méthyl, amitrole, sulfamate d'ammonium, anilofos, anisuron, anisuron, asulam, atraton, atrazine, azafenidin, azimsulfuron, aziprotryne, barban, BCPC, beflubutamid, benazolin, bencarbazone, benfluralin, benfuresate, bensulfuron-méthyle, bensulide, bentazone, benthiocarbe, benzadox, benzfendizone, benzipram, benzobicyclon, benzofénap, benzofluor, benzoylprop, benzthiazuron, bicyclopyrone, bifénox, bilafos, bispyribac-sodium, borax, bromacil, bromacil, bromobonil, bromobutide, bromofénoxim, bromoxynil, brompyrazon, butachlore, butafénacil, butamifos, butenachlor, buthidazole, buthiuron, butraline, butroxydim et buturon, butylate de butyle, acide cacodylique, cafenstrole, chlorate de calcium, cyanamide de calcium, cambendichlor, carbasulam, carbétamide, carboxazole, chlorprocarbone, carfentrazone (par exemple, carfentrazoneethyl), CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurénol, chloridazon, chlorimuron, chlornitrofène, chloropon, chlorotoluron, chloroxuron, chloroxynil, chlorpropham, chlorsulfuron, chlorthal, chlorthiamid, cinidon (par exemple, cinidon-éthyl), cinméthyline, cinosulfuron, cisanilide, clacyfos, cléthodim, cliodinate, clodinafop-propargyl, clofop, clomazone, clomeprop, cloprop, cloproxydime, clopyralide, cloransulam-méthyl, sulfate de cuivre, crédazine, crésol, cumyluron, cyanatryne, cyanazine, cycloate, cycloate, cyclopyrimorate, cyclosulfamuron, cycloxydim, cycluron, cyhalofop (par exemple, cyhalofop-butyl), cyperquat, cyprazine, cyprazole, cypromide, daimuron, dalapon, dazomet, delachlor, desmedipham, desmetryn, di-allate, dicamba, dichlobénil, dichloralurée, dichlormate, dichlorprop, dichlorprop, dichlorprop-P, diclofop-méthyle, diclosulam, diéthamquat, diéthatyle, diphénopentène, diphénoxuron, diphénzoquat, diflufénican, diflufenzopyr, diméfuron, dimépiperate, diméthachlor, diméthamidn, diméthénamide-P dimexano, dimidazon, dinitramine, dinofénate, dinoprop, dinosam, dinoseb, dinoterb, diphénamid, dipropetryn, diquat, disul, dithiopyr, diuron, églinazine, endothal, epronaz, erbon, esprocarb, ethbenzamide, éthalfluraline, éthametsulfuron, éthidimuron, éthiolate, éthobenzamid, etobenzamid, ethofumesate, ethoxyfen, ethoxysulfuron, etinofen, etnipromid, etobenzanid, fenasulam, fenoprop, fenoxaprop (par exemple, fénoxaprop-P-éthyl), fénoxaprop-P-éthyl + isoxadifène-éthyl, fenoxasulfone, fenquinotrione, fenteracol, fenthiaprop, fentrazamide, fenuron, sulfate ferreux, flamprop, flamprop-M, flazasulfuron, florasulam, fluazifop (par exemple, fluazifop-P-butyl), fluazolate, flucarbazone, flucetosulfuron, fluchloraline, flufenacet, flufénican, flufenpyr (par exemple, flufenpyréthyl), flumetsulam, flumezin, flumiclorac (par exemple, flumioxazine, flumipropyn, fluométhuron, fluorodifène, fluoroglycofène, fluoromidine, fluoronitrofène, fluothiuron, flupoxam, flupropacil, flupropanate, flupyrsulfuron, fluridone et flurochloridone, fluroxypyr, flurtamone, fluthiacét, fluthiacét, fomesafen, foramsulfuron, fosamine, fumiclorac, furyloxyfen, halauxifen, halauxifen, halauxifen-méthyl, halosafen, halosulfuron (par exemple, halosulfuronméthyl), haloxydine, haloxyfopméthyl, haloxyfop-P (par exemple, haloxyfop-P-méthyl), hexachloroacétone, hexaflurate, hexazinone, imazamethabenz, imazamox, imazapic, imazapyr, imazaquin, imazosulfuron, indanofan, indaziflam, iodobonil et iodométhane, iodosulfuron, iodosulfuron-éthyl-sodium, iofensulfuron, ioxynil, ipazine, ipfencarbazone, iprymidam, isocarbamid, isocil, isomethiozine, isonoruron, isopolinate, isopropalin, isoproturon, isouron, isoxaben, isoxachlortole, isoxaflutole, isoxaflutole, isoxapyrifop, karbutilate, kétospiradox, lancotrione, lactofène, lenacil, linuron, esters et amines, mécoprop, mecoprop-P, medinoterb, mefenacet, méfluidide, mésoprazine, mésosulfuron, mésotrione, métam, métamifop, métamitron, métazachlore, métazosulfuron, metflurazon, méthabenzthiazuron, méthalpropaline, méthhazole, méthiobencarb, méthhiozoline, méthhiuron, méthométon, méthoprotryne, bromure de méthyle, isothiocyanate de méthyle, méthyldymron, metobenzuron, metobromuron, metolachlore, metosulam, metoxuron, métribuzine, metsulfuron, metsulfuron-méthyle, molinate, monalide, monisouron, acide monochloroacétique, monolinuron, monuron, morfamquat, MSMA, naproanilide, napropamide, napropamide-M, naptalam, néburon, nicosulfuron, nipyraclofène, nitraline, nitrofène, nitrofluorfène, norflurazon, noruron, OCR, orbencarb, orthodichlorobenzène, orthosulfamuron, oryzaline, oxadiargyl, oxydiazon, oxapyrazon, oxasulfuron, oxaziclomefone, oxyfluorfen, paraflufen-éthyl, parafluron, paraquat, pébulate, acide pélargonique, pendiméthaline, penoxsulam, pentachlorophénol, pentanochlor, pentoxazone, perfluidone, pethoxamid, phenisopham, phenmedipham, phénobenzuron, acétate de phénylmercure, picloram, picolinafène, pinoxadène, pipérophos, arsénite de potassium, azoture de potassium, cyanate de potassium, prétilachlore, primisulfuron (par exemple, primisulfuron-méthyl), procyazine, prodiamine, profluazol, profluazol, profluraline, profoxydim, proglinazine, prohexadione-calcium, prométon, prometryn, propachlor, propanil, propaquizafop, propazine, propham, propisochlor, propoxycarbazone, propyrisulfuron, propyzamide, prosulfaline, prosulfocarbe, prosulfuron, proxan, prynachlore, pydanon, pyraclonil, pyraflufen (par exemple, pyraflufen-éthyl), pyrasulfotole, pyrazogyl, pyrazolynate, pyrazosulfuron-éthyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-éthyl, rhodéthanil, rimsulfuron, saflufénacil, S-métolachlor, sebuthylazine, secbumeton, sethoxydim, siduron, simazine, simeton, simetryn, SMA, arsénite de sodium, azoture de sodium, chlorate de sodium, sulcotrione, sulfallate, sulfentrazone, sulfométhuron, sulfosate, sulfosulfuron, sulfosulfuron, acide sulfurique, sulglycapine, téfuryltrione, tébuthiuron, tébutam, tébutame, sulglycapine, balayage, TCA, tembotrione, tepraloxydim, terbacil, terbucarbe, terbuchlore, terbumeton, terbuthylazine, terbutryn, tétrafluron, thenylchlor, thiazafluron, thiazopyr, thidiazimin, thidiazuron, thiencarbazonemethyl, thifensulfuron, thifensulfuron-méthyle, thiobencarbe, tiafénacil, tiocarbazil, tioclorim, tolpyralate, topramezone, tralkoxydime, triafamone, tri-allate, triasulfuron, triaziflam, tribenuron (par exemple, tribenuron-méthyle), tricamba, triclopyr par exemple, sel de choline du triclopyr), triclopyr esters et sels, tridiphane, triétazine, trifloxysulfuron, trifludimoxazine, trifluraline, triflusulfuron, trifop, trifopsime, trihydroxytriazine, triméturon, tripropindan, tritac, tritosulfuron, vernolate, xylachlore et sels, sels de choline, esters, isomères optiquement actifs et leurs mélanges.

Le co-herbicide peut également être choisi parmi les sulfonylurées ou les herbicides anti-graminées foliaires, tels que, par exemple, FOP (aryloxyphénoxypropionate) et DIM (cyclohexanedione).

Le co-herbicide peut également consister en le glyphosate ou l'un de ses sels, esters ou autres dérivés, ou mélanges de ces sels, esters ou autres dérivés entre eux.

Les sels de glyphosate qui peuvent être ainsi utilisés sont les sels mono-, di- ou tribasiques du glyphosate tels que les sels d'ammonium (mono-, di- ou triammonium), les sels de métaux alcalin tels que le sodium ou le potassium, les sulfonium et les sels d'ammonium organiques du glyphosate.

Les sels d'ammonium organiques du glyphosate peuvent être choisi parmi les sels d'amines aliphatiques ou aromatiques, et peuvent inclure les sels d'amines primaires, secondaires, tertiaires ou quaternaires.

Parmi les sels organiques du glyphosate, on peut citer les sels d'isopropylamine, de n-propylamine, d'éthylamine, de diméthylamine, de monoéthanolamine, d'éthylènediamine et de hexaméthylènediamine.

Les sels de glyphosate qui peuvent être utilisés peuvent également consister en les sels de potassium, de monoammonium, de diammonium, de sodium, de monoéthanolamine, de n-propylamine, d'isopropylamine, d'éthylamine, de diméthylamine, d'éthylènediamine, d'hexaméthylènediamine, de triméthylsulfonium et leurs mélanges.

Le co-herbicide peut consister en l'acide pélargonique. Les compositions contenant de l'alcool benzylique et de l'acide pélargonique comme substances actives et leur utilisation comme herbicide, en particulier comme herbicide sytémique sont des objets de l'invention. Ces compositions ont une activité herbicide.

D'autres co-herbicides avantageux sont choisis par exemple, parmi l'acide benzoïque, le dicamba ou l'acide 2,4-dichlorophénoxyacétique (2,4-D). Avantageusement, on peut utiliser comme co-herbicide un composé qui ne possède pas d'activité herbicide, mais qui, par exemple, accroit l'activité herbicide de l'alcool benzylique et/ou rend son action plus rapide. De tels composés peuvent être choisis, par exemple, parmi l'acide salicylique, le benzoate de sodium, l'alcool phénéthylique, le lysozyme et l'EDTA.

On met généralement en oeuvre une proportion pondérale entre l'herbicide alcool benzylique et le co-herbicide, qui peut être comprise entre 150 :1 et 1 :150, de préférence entre 120 :1 et 1 :120, en particulier entre100 :1 et 1 :100 ou entre 50 :1 et 1 :50, et notamment entre 20 :1 et 10 :1, en particulier entre 20 :1 et 5 :1.

Dans la présente description, et sauf stipulation contraire, les gammes de valeur indiquées s'entendent bornes incluses.

L'alcool benzylique, seul ou en association avec au moins un co-herbicide, peut être formulé dans une composition pouvant aussi contenir un ou plusieurs adjuvants ou excipients acceptables en phytopharmacie. De tels adjuvants ou excipients peuvent être sous forme solide telle que, par exemple, sous forme de poudre, de granule ou de poudre mouillable, ou sous forme liquide telle que, par exemple, des concentrés émulsifiables, des solutions, des émulsions ou des suspensions, en vue d'améliorer les caractéristiques physicochimiques, la stabilité du produit dans le temps et/ou certains modes d'application.

L'alcool benzylique peut être présent dans ladite composition, par exemple, à raison de 1 à 99% en poids, notamment de 1 à 90% en poids, par exemple de 5 à 90% en poids, en particulier de 10% à 80% en poids, plus particulièrement de 20 % à 70%, par rapport au poids total de la composition.

En outre, l'adjuvant ou l'excipient peut être également fourni sous forme de prémix.

Ces excipients peuvent notamment consister en un ou plusieurs tensioactifs en vue d'augmenter l'effet herbicide de l'alcool benzylique ou, le cas échéant, de l'un ou l'autre des co-herbicides mentionnés ci-dessus.

Ces tensioactifs peuvent être inclus dans la composition contenant l'herbicide pour faciliter la rétention par les plantes de l'herbicide, ainsi que pour permettre une meilleure absorption par les plantes de l'herbicide, afin d'améliorer l'efficacité herbicide.

Par exemple, le rapport pondéral entre la quantité totale d'herbicide et de tensioactif peut être compris entre 0,5 :100 et 100 :1, en particulier entre 0,5 :50 et 50 :1, plus particulièrement entre 0,5 :20 et 20 :1, notamment entre 1 :20 et 10 :1, notamment entre 1 :10 et 5 :0,5.

Les tensioactifs qui peuvent être utilisés peuvent être choisis parmi les étheramines alcoxylés tertiaires, les étheramines quaternaires alcoxylées, les oxydes d'étheramine alcoxylés, les amines tertiaires alcoxylés, les amines quaternaires alcoxylés, les polyamines alcoxylés, les sulfates, les sulfonates, les esters de phosphate, les alkylpolysaccharides, les alcools alcoxylés, les amidoalkylamines et leurs combinaisons.

Parmi les exemples de tensioactifs à base d'étheramine tertiaire alcoxylée, mentionnons les agents tensioactifs de la série TOMAH E, comme le TOMAH E-14-2 (bis-(2-hydroxyéthyl) isodécyloxypropylamine), TOMAH E-14-5 (poly(5)oxyéthylène isodécyloxypropyloxypropylamine), TOMAH E-17-2, TOMAH E-17-5 (poly(5)oxyéthylène isotridécyloxypropyl amine), TOMAH E-19-2, TOMAH E-18-2, TOMAH E-18-5 (poly(5)oxyéthylène octadécylamine), TOMAH E18- 15, TOMAH E-19-2 (bis-(2-hydroxyéthyl)alkyloxypropylamine linéaire), TOMAH E-S-2, TOMAH E-S-15, TOMAH E-T-2 (bis-(2-hydroxyéthyl) suif amine), TOMAH E-T-T-5 (poly(5)oxyéthylène suif amine) et TOMAH E-T-15 (poly(15)oxyéthylène suif amine), tous disponibles auprès d'Air Products and Chemicals, Inc.. Les tensioactifs quaternaires alcoxylés à base d'étheramine destinés à être utilisés dans les mélanges et compositions herbicides décrits dans le présent document comprennent, par exemple, TOMAH Q-14-2, TOMAH Q-17-2, TOMAH Q-17-5, TOMAH Q-18-2, TOMAH Q-S, TOMAH Q-S-S-80, TOMAH Q-D-T, TOMAH Q-DT-HG, TOMAH Q-C-15, et TOMAH Q-ST-50, tous disponibles chez Air Products and Chemicals, Inc.

Parmi les exemples de tensioactifs à base d'oxyde d'étheramine alcoxylé, on peut citer les tensioactifs de la série TOMAH AO, tels que TOMAH AO-14-2, TOMAH AO-728, TOMAH AO- 17-7, TOMAH AO-405 et TOMAH AO-455, tous disponibles chez Air Products and Chemicals, Inc. Les tensioactifs d'oxyde d'amine tertiaire alcoxylés comprennent, par exemple, tous les tensioactifs de la série AROMOX, y compris AROMOX C/12, AROMOX C/12W, AROMOX DMC, AROMOX DM16, AROMOX DMHT et AROMOX T/12 DEG, tous ces produits sont disponible auprès d'Akzo Nobel.

Les tensioactifs aminés tertiaires alcoxylés comprennent, par exemple, ETHOMEEN T/12, ETHOMEEN T/20, ETHOMEEN T/25, ETHOMEEN T/30, ETHOMEEN T/60, ETHOMEEN C/12, ETHOMEEN C/15 et ETHOMEEN C/25, qui sont tous disponibles chez Akzo Nobel. Les tensioactifs à base d'amines quaternaires alcoxylées comprennent, par exemple, ETHOQUAD T/12, ETHOQUAD T/20, ETHOQUAD T/25, ETHOQUAD C/12, ETHOQUAD C/15 et ETHOQUAD C/25, qui sont tous disponibles chez Akzo Nobel.

Les tensioactifs polyaminés alcoxylés comprennent, par exemple, les éthoxylates de ADOGENE 560 (N-coco propylène diamine) contenant en moyenne de 2EO à 20EO, pour par exemple, 4,8, 10 ou 13.4EO ; les éthoxylates d'ADOGENE 770 (N-suif propylènediamine) contenant en moyenne de 2EO à 20EO, par exemple 13EO ; et des éthoxylates d'ADOGÈNE 670 (N-suif propylènetriamine) contenant en moyenne de 3EO à 20EO, par exemple, 14,9EO, tous disponibles auprès de Witco Corp. D'autres tensioactifs polyaminés destinés à être utilisés dans les Triamine C, Triamine OV, Triamine T, Triamine YT, Triamine YT, Triameen Y12D, Triameen Y12D-30, Tetrameen OV, Tetrameen T3, sont tous disponibles chez Akzo Nobel.

Les agents tensioactifs sulfatés comprennent, par exemple, le sulfate d'éthoxylate de nonylphénol sodique (4 EO), le sulfate d'éthoxylate de sodiumnonylphénol (10 EO), WITCOLATE 1247H, WITCOLATE 7093, WITCOLATE 7259, WITCOLATE 1276, WITCOLATE LES-60A, WITCOLATE LES- 60C, WITCOLATE 1050, WITCOLATE WAQ, WITCOLATE D-51-51 et WITCOLATE D51-53, tous disponibles auprès de Witco Corp. Les agents tensioactifs sulfonates comprennent, par exemple, WITCONATE 93S, WITCONATE NAS-8, WITCONATE AOS, WITCONATE 60T et WITCONATE 60T WITCONATE 605, qui sont tous disponibles chez Witco Corp.

Les esters phosphatés des tensioactifs alcoxylés comprennent, par exemple, EMPHOS CS-121, EMPHOS PS-400 et WITCONATE D-51-29, disponibles chez Witco Corp. D'autres exemples incluent les tensioactifs de la série PHOSPHOLAN disponibles chez Akzo Nobel.

Les polysaccharides d'alkyles constituent une autre catégorie d'agents tensioactifs appropriée. A titre d'exemple d'agent tensioactif alkylpolysaccharide, on peut citer les agents tensioactifs alkylpolyglucosides (APG) tels que AGNIQUE PG8107-G (AGRIMUL PG2067) disponibles chez BASF. Comme autre tensioactif alkylpolysaccharidique, on peut citer APG 225, APG 325, APG 425, APG 625, GLUCOPON 600, PLANTAIRE 600, PLANTAIRE 1200, PLANTAIRE 1300, PLANTAIRE 2000, AGRIMUL PG 2076, AGRIMUL PG 2067, AGRIMUL PG 2072, AGRIMUL PG 2069, AGRIMUL PG 2062, AGRIMUL PG 206S et BEROL AG 6202.

Les tensioactifs alcoxylés comprennent, par exemple, EMULGIN L, PROCOL LA-15 (de Protameen) ; BRIJ 35, BRIJ 56, BRIJ 76, BRIJ 78, BRIJ 97, BRIJ 98 (de Sigma Chemical Co.) ; NEODOL 25-12 et NEODOL 45-13 (de Shell) ; HETOXOL CA-10, HETOXOL CA-20, HETOXOL CS-9, HETOXOL CS-15, HETOXOL CS-20, HETOXOL CS-25, HETOXOL CS-30, PLURAF AC A38 et PLURAF AC LF700 (de BASF) ; ST-8303 (de Cognis) ; AROSURF 66 E10 et AROSURF 66 E20 (de Witco/Crompton) ; suif éthoxylé (9,4 EO), suif propoxylé (4,4 EO) et suif alcoxylé (5-16 EO et 2-5 PO) (de Witco/Crompton). On peut aussi citer SURFONIC NP9S et SURFONIC LF-X de Huntsman Chemical Co. et la série TERGITOL de Dow.

Dans certains cas, un ou plusieurs tensioactifs amidoalkylamines peuvent être inclus pour améliorer la stabilité de la composition contenant l'herbicide ou le mélange herbicide.

On peut utiliser en particulier un tensioactif non ionique tel qu'un ester de sucre et d'acide(s) gras polyéthoxylé, en particulier le monolaurate de polyoxyéthylène (20)sorbitan (également dénommé polysorbate 20 ou Tween^{®}20).

Une composition herbicide utilisable conformément à l'invention peut également comprendre d'autres adjuvants et excipients conventionnels, tels que, par exemple, les agents anti-mousse, des conservateurs, des agents antimicrobiens, les agents antigel, des agents épaississants, des colorants et des agents améliorant la solubilité des herbicides, des agents facilitant la pénétration et/ou l'étalement ou tout autre additif usuel dans le domaine des produits phytopharmaceutiques.

La composition comprenant l'herbicide alcool benzylique utilisable conformément à l'invention peut se présenter sous différentes formes, de préférence sous forme de solution aqueuse ou de solution ou suspension concentrée, de dispersion huileuse ou sous forme de microcapsules, de poudre ou de granulés.

Un véhicule liquide approprié peut être choisi, par exemple, parmi l'eau et solvants organiques. On peut citer, à titre d'exemples, les huiles minérales, les solvants aromatiques, les huiles de paraffine ; les huiles végétales telles que l'huile de soja, de colza, d'olive, de ricin, de graine de tournesol, de coco, de maïs, de graine de coton, de graine de lin, de palme, d'arachide, de sésame etc. et leurs esters ; les esters de monoalcools ou d'alcools di- ou tri-hydroxylés ou de polyalcools ayant 4 à 6 groupes hydroxy, tels que 2-ethylhexylstérarae, n-butyl oléate, isopropyl myristate, propylèneglycol dioléate, di-octyl succinate, di-butyl adipate, di-octyl phtalate etc. ; les esters d'acides mono-, di- et polycarboxyliques ; les solvants organiques tels que toluène, xylène, acétone, methyléthylcétone, cyclohexanone, trichloroéthylène, perchloroéthylène, acétate d'éthyle, acétate d'amyle, acétate de butyle, propylène glycol monométhyl éther, diéthylène glycol monométhyl éther, alcool méthylique, alcool éthylique, ethylène glycol, propylène glycol, glycérine, N-méthyl-2-pyrrolidone, N,N-diméthyl alkylamides, diméthylsulfoxyde, etc. ; ou les engrais liquides.

Une composition herbicide utilisable conformément à l'invention peut être facilement obtenue par simple mélange (dispersion ou solubilisation) de l'alcool benzylique avec les autres composants de la composition, en particulier les co-herbicides et les autres adjuvants et tensioactifs mentionnés ci-dessus.

Par ailleurs, les compositions herbicides utilisable conformément à l'invention peuvent contenir d'autres pesticides que des herbicides, tels que les fongicides ou des insecticides, des agents fertilisants et/ou des régulateurs de croissance. Une composition utilisable conformément à l'invention peut se présenter sous forme de poudres mouillable qui sont produites par dispersion uniforme dans l'eau en présence ou non de tensioactifs tels que des tensioactifs ioniques ou non-ioniques, par exemple les alkylphénolypolyéthoxylés, les alcools gras polyéthoxylés ou les amines grasses, les alcools sulfonates, les alkylbenzènes sulfonates, le linéosulfonate de sodium.

Les concentrés émulsifiables peuvent être préparés par dissolution de l'alcool benzylique et, le cas échéant, du ou des co-herbicides.

Les concentrés émulsifiables peuvent être préparés par dissolution du principe actif dans un solvant organique tel que butanol, cyclohexanone, diméthylformamide, xylène ou autres aromatiques ou hydrocarbures à point d'ébullition élevé avec ajout d'un ou plusieurs tensioactifs ioniques ou non ioniques (émulsifiants). Comme émulsifiants pouvant être utilisés, on peut citer les sels de calcium d'acides alkylarylsulfoniques tels que le dodécylbenzène sulfonate de calcium, ou les émulsifiants non ioniques tels que les esters polyglycoliques d'acides gras, les alkylaryles polyglycoléthers, les polyglycoléthers d'alcools gras, les polyglycoléthers, les condensats d'oxyde de propylène/oxyde d'éthylène, alkyles polyéthers, les esters d'acides gras de sorbitane, les esters d'acides gras de polyoxyéthylène sorbitane ou les esters polyoxyéthylène de sorbitol.

### Brève description des dessins

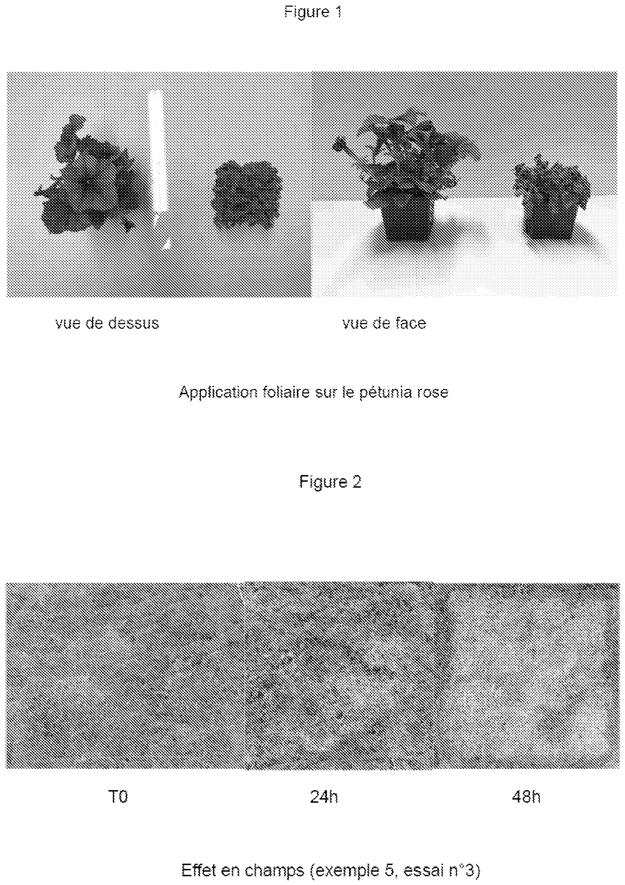

[Fig. 1] : effet de l'alcool benzylique en application foliaire sur le pétunia rose (exemple 1).
[Fig. 2] : effet de l'alcool benzylique en champs (essai n°3 de l'exemple 5).

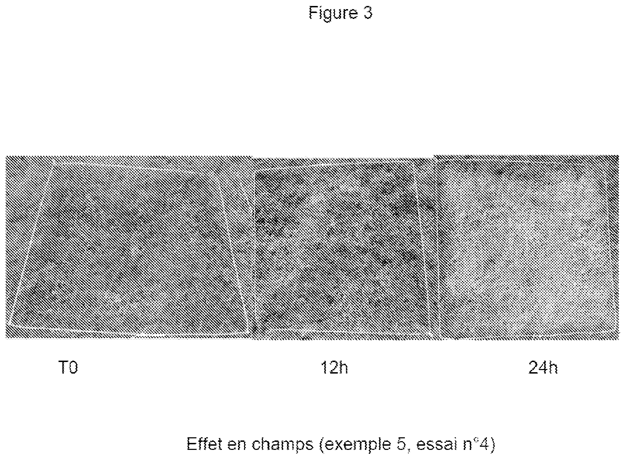

[Fig. 3] : effet de l'alcool benzylique en champs (essai n°4 de l'exemple 5).

### Exemples

L'invention est illustrée de manière non limitative par les exemples suivants. Dans tous les exemples, lorsque l'alcool benzylique a été dilué, cette dilution a été effectuée avec de l'eau.

### Exemple 1 : Application foliaire

Des essais ont été réalisés sur différentes plantes par application foliaire (pulvérisation) pour évaluer la fonction herbicide, son mode d'application en foliaire et sa vitesse d'action.

### 1) Protocole

Les essais ont été effectués sur des plantes en pot. L'application du produit est effectuée avec un flacon pulvérisateur à gâchette qui permet de pulvériser 1g de produit par pulvérisation en microgouttelettes.

Les plantes ont été arrosées avec différentes quantités d'eau contenant différentes quantités d'alcool benzylique pur (PanReac AppliChem - ITW Reagents). Les plantes non traitées (contrôles) sont arrosées avec la même quantité totale, mais d'eau uniquement.

Les plantes ont été observées aux temps suivants : T0, 6h, 24h, 48h, 72h, 96h et 120h.

L'affaissement de la plante, l'intensité de la couleur de la plante et le diamètre de la plante ont été mesurés de la manière suivante :
- Affaissement de la plante : l'affaissement est évalué sur une échelle de 1 à 5. Un score de 5 correspond à l'état du port de la plante à T0 et de 1 à un affaissement total de la plante.
- Intensité de la couleur : la couleur de la plante (feuilles et fleurs) est évaluée sur une échelle de 1 à 5. Un score de 5 correspond à l'intensité de la couleur de la plante à T0 et un score de 1 à une décoloration complète de la plante (blanc ou marron selon le type de plante).
- Diamètre de la plante : le diamètre de la plante correspond à la surface occupée par la plante vue de dessus et est évalué par un score de 1 à 5. Un score de 5 correspond au diamètre de la plante à T0 et un score de 1 correspond à la taille du pot (ou inférieure à celle-ci).

### 2) Résultats

Les résultats sont donnés dans le tableau 1 ci-dessous, dans lequel figure, pour chaque plante, le temps auquel on passe d'un score de 5 (T0) à un score de 1. Les quantités d'eau et d'alcool benzylique sont exprimées en g et en quantité équivalente en L/Ha.

**Tableau 1**

| Plante | Quantité totale de produit : Eau seule (plante contrôle) ou Eau + alcool benzylique (plante traitée) | Alcool benzylique (plante traitée) | Affaissement plante traitée (score et temps) | Intensité de la couleur plante traitée (score et temps) | Diamètre plante traitée (score et temps) |
|---|---|---|---|---|---|
| Pétunia blanc | 6g (300L/Ha) | 0,1g (5L/Ha) | 1 à 96h | 1 à 96h | 1 à 120h |
| Pétunia rose | 4g (200L/ha) | 0,4g (20L/Ha) | 1 à 72h | 1 à 48h | 1 à 96h |
| Viola cornuta violette | 12g (600L/Ha) | 1g (50L/Ha) | 1 à 48h | 1 à 24h | 1 à 48h |
| Dalhia | 20g (1000L/ha) | 2g (100L/Ha) | 1 à 48h | 1 à 24h | 1 à 72h |
| Sauge | 10g (500L/Ha) | 4g (200L/Ha) | 1 à 48h | 1 à 24h | 1 à 48h |
| Lobélia | 6g (300L/ha) | 6g (300L/Ha) | 1 à 24h | 1 à 24h | 1 à 24h |
| Œillet d'Inde | 16g (800L/ha) | 8g (400L/Ha) | 1 à 24h | 1 à 24h | 1 à 48h |
| Viola cornuta blanche | 12g (600L/Ha) | 12g (600L/Ha) | 1 à 6h | 1 à 6h | 1 à 6h |
| Lierre | 20g (1000L/Ha) | 16g (800L/Ha) | 1 à 96h | 1 à 48h | 1 à 96h |

### 3) Conclusion

Les résultats montrent que l'alcool benzylique utilisé en application foliaire montre une efficacité importante quelle que soit la quantité d'eau utilisée. Au contact de l'alcool benzylique et en quelques heures, les plantes s'affaissent, la plante perd en rigidité puis s'effondre.

La rapidité d'action est dose-dépendante pour une variété donnée. Plus la concentration en matière active est importante, plus le résultat est rapide.

### Exemple 2 : Application systémique par contact avec les parties aériennes

Des essais ont été réalisés sur différentes plantes par traitement sur une fraction des parties aériennes.

### 1) Protocole

Les essais ont été effectués sur des plantes en pot.

L'action systémique a été évaluée sur plusieurs types de plantes par traitement sur une fraction de ses parties aériennes.

L'application du produit est effectuée avec un flacon pulvérisateur à gâchette qui permet de pulvériser 1g de produit par pulvérisation, en microgouttelettes. Les plantes traitées sont aspergées sur une seule moitié, avec différentes quantités d'eau comprenant différentes quantités d'alcool benzylique pur (PanReac AppliChem - ITW Reagents). Les plantes non traitées (contrôles) sont aspergées de la même quantité totale, mais d'eau uniquement.

Les plantes sont observées aux temps suivants : T0, 6h, 24h, 48h, 72h, 96h, 120h, 144h, 168h.

On a mesuré l'affaissement de la plante, l'intensité de la couleur et le diamètre de la plante comme indiqué dans l'exemple 1. On a également mesuré le temps d'efficacité systémique de la manière suivante :
- Temps d'efficacité systémique : 50% de la plante sont initialement traités par le produit. Le temps nécessaire pour voir apparaitre les premiers effets sur la partie non traitée (en systémique) est déterminé.

### 2) Résultats

Les résultats sont donnés dans le tableau 2 ci-dessous, dans lequel figure, pour chaque plante traitée, le temps auquel on passe d'un score de 5 (T0) à un score de 1.

Les quantités d'eau et d'alcool benzylique sont exprimées en g et en quantité équivalente en L/Ha.

Pour les plantes traitées, les résultats sont indiqués comme suit : temps d'efficacité systémique (colonne A), affaissement (colonne B), intensité de la couleur (colonne C), diamètre (colonne D).

**Tableau 2**

| Plante | Quantité totale de produit : Eau seule (plante contrôle) ou Eau + alcool benzylique (plante traitée) | Alcool benzylique (plante traitée) | A | B (score et temps) | C (score et temps) | D (score et temps) |
|---|---|---|---|---|---|---|
| Viola cornuta | 12g (600L/Ha) | 0,1g (5L/Ha) | plante entière affectée à 120h | 1 à 168h | 1 à 144h | 1 à 168h |
| Hypoestes | 8g (400L/Ha) | 1g (50L/Ha) | plante entière affectée à 96h | 1 à 120h | 1 à 120h | 1 à 144h |
| Ostéo-spermum | 2g (100L/Ha) | 2g (100L/Ha) | plante entière affectée à 96h | 1 à 144h | 1 à 120h | 1 à 144h |
| Œillet d'Inde | 4g (200L/Ha) | 4g (200L/Ha) | plante entière affectée à 72h | 1 à 86h | 1 à 96h | 1 à 120h |
| Pétunia blanc | 16g (800L/Ha) | 10g (500L/Ha) | plante entière affectée à 24h | 1 à 48h | 1 à 48h | 1 à 48h |
| Graminée | 20g (1000L/Ha) | 16g (800L/Ha) | plante entière affectée à 96h | 1 à 144h | 1 à 120h | 1 à 168h |

### 3) Conclusion

L'application foliaire de l'alcool benzylique sur une partie de la plante uniquement montre une efficacité rapide sur la plante entière. L'impact généralisé à toute la plante sous 3 à 5 jours atteste d'un effet systémique. L'alcool benzylique circule dans les tissus conducteurs et affecte l'ensemble de la plante.

### Exemple 3 : action systémique par contact avec les parties souterraines

### 1) Protocole

Les essais ont été effectués sur des plantes en pot.

On a utilisé l'alcool benzylique pur (PanReac AppliChem - ITW Reagents). Deux plantes en pots (Viola cornuta) ont été déposées, chacune, dans un sous-pot contenant respectivement 40g d'alcool benzylique pur ou 40g d'eau (contrôle). Par capillarité, les liquides contenus dans le sous-pot sont absorbées par la terre et entrent en contact avec les racines.

Les plantes sont observées à 0, 24h, 48h, 72h, 96h, 120, 144h et 168h.

On a mesuré le temps d'efficacité systémique, l'affaissement de la plante, l'intensité de la couleur et le diamètre de la plante comme indiqué dans les exemples 1 et 2.

### 2) Résultats

Pour la plante dont le sous-pot contient 40g d'alcool benzylique pur, on observe les résultats suivants :
- Temps d'efficacité systémique : la plante entière est affectée en 48h.
- Affaissement : la plante passe d'un score de 5 à un score de 1 en 72h.
- Intensité de la couleur : la plante passe d'un score de 5 à un score de 1 en 48h.
- Diamètre de la plante : la plante passe d'un score de 5 à un score de 1 en 96h.

Ces résultats corroborent les résultats obtenus par arrosage lorsqu'on traite la moitié de la plante et confirme l'action systémique de l'herbicide alcool benzylique. En effet, c'est la prise en charge du produit actif par le système racinaire et sa distribution à l'ensemble de la plante qui permet d'induire un effet sur le système foliaire.

### Exemple 4 : Activité non-sélective

### 4.1) Plantes herbacées

Le caractère non sélectif de l'alcool benzylique a été étudié sur 3 variétés communes de plantes herbacées, deux dicotylédones (pissenlit et trèfle) et une monocotylédone (graminées).

Le pissenlit est une herbacée composé d'une rosette de feuilles. Ses graines qui s'envolent au vent dispersent cette plante partout, faisant d'elle une mauvaise herbe particulièrement présente dans les jardins.

Le trèfle est une espèce particulièrement robuste. Cette plante développe des rhizomes traçants lui permettant de se répandre assez rapidement et de pouvoir survivre après une perte de ses feuilles, faisant de cette plante un bon modèle pour tester l'effet systémique d'un herbicide.

La graminée du type raygrass permet de confirmer que le spectre d'action de l'alcool benzylique est large.

### a) Protocole

Les essais ont été effectués sur des plantes en pot. L'application du produit est effectuée avec un flacon pulvérisateur à gâchette qui permet de pulvériser 1g de produit par pulvérisation, en microgouttelettes.

Les plantes traitées sont aspergées avec différentes quantités d'eau comprenant différentes quantités d'alcool benzylique pur (PanReac AppliChem - ITW Reagents). Les plantes non traitées (contrôles) sont aspergées uniquement de la même quantité totale d'eau.

Les plantes sont observées aux temps suivants : T0, 6h, 24h, 48h, 72h, 96h. On a mesuré l'affaissement de la plante, l'intensité de la couleur et le diamètre de la plante comme indiqué dans l'exemple 1.

### b) Résultats

Les résultats sont donnés dans le tableau 3 ci-dessous, dans lequel figure, pour chaque plante, le temps auquel on passe d'un score de 5 (T0) à un score de 1.

Les quantités d'eau et d'alcool benzylique sont exprimées en g et en quantité équivalente en L/Ha.

**Tableau 3**

| Plante | Quantité totale de produit : Eau seule (plante contrôle) ou Eau + alcool benzylique (plante traitée) | Alcool benzylique (plante traitée) | Affaissement (score et temps) | Intensité de la couleur (score et temps) | Diamètre (score et temps) |
|---|---|---|---|---|---|
| Pissenlit | 8g (400L/Ha) | 4g (200L/Ha) | 1 à 48h | 1 à 24h | 1 à 48h |
| Trèfle | 8g (400L/Ha) | 4g (200L/Ha) | 1 à 48h | 1 à 24h | 1 à 48h |
| Graminée | 8g (400L/Ha) | 4g (200L/Ha) | 1 à 48h | 1 à 24h | 1 à 48h |

### 4.2) Ronces

Les ronces sont des plantes très envahissantes dans les fossés et sur les voies de chemin de fer. Ce sont des plantes pérennes, qui possèdent en outre des racines puissantes et des épines qui les rendent difficile à arracher.

### a) Protocole

Les essais ont été effectués sur des plantes en pot.

L'application du produit est effectuée avec un flacon pulvérisateur à gâchette qui permet de pulvériser 1g de produit par pulvérisation, en microgouttelettes. Les plantes traitées sont aspergées avec différentes quantités d'eau comprenant différentes quantités d'alcool benzylique pur (PanReac AppliChem - ITW Reagents). Les plantes non traitées (contrôles) sont aspergées uniquement de la même quantité totale d'eau.

Les ronces sont aspergées avec :
- 16g de produit (équivalent à 800L/Ha) dont 12g d'alcool benzylique pur pour les plantes traitées (équivalent à 600L/Ha d'alcool benzylique pur), et
- 16 g d'eau pour les plantes contrôles.

Les plantes sont observées aux temps suivants : T0, 6h, 24h, 48h, 72h, 96h, 120h et 144h. On a mesuré l'affaissement de la plante, l'intensité de la couleur et le diamètre de la plante comme indiqué dans l'exemple 1.

### b) Résultats

- Affaissement : La plante passe d'un score de 5 à un score de 1 en 144h.
- Intensité de la couleur : La plante passe d'un score de 5 à un score de 1 en 96h.

Les plantes contrôles ne présente aucune différence avant et après traitement.

### 4.3) Conclusion

L'activité herbicide non-sélective de l'alcool benzylique permet son utilisation dans des zones cultivées ou non-cultivées (agricoles, non agricoles, voies ferrées, etc.) qui présentent des variétés de plantes très hétérogènes.

### Exemple 5 : Essais en champs avec l'alcool benzylique utilisé seul

### 1) Essai n°1

### 1.1) Protocole

Les essais en champs ont été réalisés sur des carrés d'herbes ayant une surface de 1m². L'application du produit est effectuée avec un pulvérisateur à pression préalable permettant de pulvériser de 20 à 100g de liquide sur une surface de 1m² (équivalent à 200 - 1000L/Ha).

Les carrés d'herbe traités sont pulvérisés avec une quantité totale d'eau et d'alcool benzylique pur (PanReac AppliChem - ITW Reagents) de 20g (équivalent 200l/Ha) dont 0,5g d'alcool benzylique (équivalent à 5L/Ha d'alcool benzylique pur).

Les carrés d'herbe contrôles reçoivent une quantité totale de 20g d'eau uniquement.

Les carrés d'herbe sont observés aux temps suivants T0, 6h, 24h, 48h, 72h, 96h, 120h, 144h, 168h.

Les mesures et évaluations suivantes ont été effectuées :
- Pourcentage de la surface touchée : Suite aux essais en pots, il a été remarqué que le changement de couleur était corrélé à l'affaissement et à la mort des plantes. Le temps nécessaire pour impacter la couleur de l'herbe ainsi que sa surface a été évalué.
- Mesure de l'affaissement de l'herbe : on mesure la distance entre la terre et la partie la plus haute de 10 brins d'herbes sélectionnés au hasard dans un carré. La moyenne de ces 10 brins est calculée et, après traitement, dès que cette distance moyenne est réduite de 30% le temps d'affaissement est déterminé.

### 1.2) Résultats

- Pourcentage de surface touchée : On observe un pourcentage maximal de surface touchée de 45% 96h après le traitement.
- Affaissement de l'herbe: 72h après le traitement, l'herbe présente un

### 2) Essai n°2

### 2.1) Protocole

L'essai n°2 a été réalisé dans les mêmes conditions que l'essai n°1, excepté le fait que les carrés d'herbe traités sont pulvérisés avec une quantité totale d'eau et d'alcool benzylique de 60g (équivalent 600L/Ha) dont 5g d'alcool benzylique pur (équivalent à 50L/Ha d'alcool benzylique pur).

Les carrés d'herbe contrôles reçoivent une quantité totale de 60g d'eau uniquement.

Le pourcentage de la surface touchée et l'affaissement de l'herbe ont été évalués comme indiqué plus haut.

### 2.2) Résultats

- Pourcentage de surface touchée : On observe un pourcentage maximal de surface touchée de 60% 72h après le traitement.
- Affaissement de l'herbe: 48h après le traitement, l'herbe présente un affaissement moyen de 30%.

### 3) Essai n°3

### 3.1) Protocole

L'essai n°3 a été réalisé dans les mêmes conditions que l'essai n°1, excepté le fait que les carrés d'herbe traités sont pulvérisés avec une quantité totale de 20g d'alcool benzylique pur (équivalent à 200L/Ha d'alcool benzylique pur). Les carrés d'herbe contrôles reçoivent une quantité totale de 20g d'eau uniquement.

Le pourcentage de la surface touchée et l'affaissement de l'herbe ont été évalués comme indiqué plus haut.

### 3.2) Résultats

- Pourcentage de surface touchée : On observe un pourcentage maximal de surface touchée de 80% 48h après le traitement.
- Affaissement de l'herbe: 48h après le traitement, l'herbe présente un affaissement moyen de 30%.

### 4) Essai n°4

### 4.1) Protocole

L'essai n°4 a été réalisé dans les mêmes conditions que l'essai n°1, excepté le fait que les carrés d'herbe traités sont pulvérisés avec une quantité totale d'eau et d'alcool benzylique de 60g (équivalent 600L/Ha) dont 40g d'alcool benzylique pur (équivalent à 400L/Ha d'alcool benzylique pur).

Les carrés d'herbe contrôles reçoivent une quantité totale de 60g d'eau uniquement.

Le pourcentage de la surface touchée et l'affaissement de l'herbe ont été évalués comme indiqué plus haut.

### 4.2) Résultats

- Pourcentage de surface touchée : On observe un pourcentage maximal de surface touchée de 100% 24h après le traitement.
- Affaissement de l'herbe: 24h après le traitement, l'herbe présente un affaissement moyen de 30%.

### 5) Essai n°5

### 5.1) Protocole

L'essai n°5 a été réalisé dans les mêmes conditions que l'essai n°1, excepté le fait que les carrés d'herbe traités sont pulvérisés avec une quantité totale d'eau et d'alcool benzylique de 100g (équivalent 1000L/Ha) dont 60g d'alcool benzylique pur (équivalent à 600L/Ha d'alcool benzylique pur).

Les carrés d'herbe contrôles reçoivent une quantité totale de 100g d'eau uniquement.

Le pourcentage de la surface touchée et l'affaissement de l'herbe ont été évalués comme indiqué dans l'exemple 4.

### 5.2) Résultats

- Pourcentage de surface touchée : On observe un pourcentage maximal de surface touchée de 100% 24h après le traitement.
- Affaissement de l'herbe: 6h après le traitement, l'herbe présente un affaissement moyen de 30%.

### 6) Essai n°6

### 6.1) Protocole

L'essai n°6 a été réalisé dans les mêmes conditions que l'essai n°1, excepté le fait que les carrés d'herbe traités sont pulvérisés avec une quantité totale de 80g d'alcool benzylique pur (équivalent à 800L/Ha d'alcool benzylique pur). Les carrés d'herbe contrôles reçoivent une quantité totale de 80g d'eau uniquement.

Le pourcentage de la surface touchée et l'affaissement de l'herbe ont été évalués comme indiqué dans l'exemple 4.

### 6.2) Résultats

- Pourcentage de surface touchée : On observe un pourcentage maximal de surface touchée de 100% 6h après le traitement.
- Affaissement de l'herbe: 6h après le traitement, l'herbe présente un affaissement moyen de 30%.

### Exemple 6 : Essais en champs avec l'alcool benzylique utilisé en association

### Essai n°1 : Alcool benzylique et acide pélargonique

### 1.1) Protocole

Les essais en champs ont été réalisés sur des carrés d'herbes ayant une surface de 1m². On a utilisé de l'alcool benzylique pur (PanReac AppliChem - ITW Reagents) et de l'acide pélargonique disponible commercialement, composé de 24,3% d'acide pélargonique (Désherbant allée et terrasses - BHS - Naturnet).

L'application du produit est effectuée avec un pulvérisateur à pression préalable permettant de pulvériser de 20 à 100g de liquide sur une surface de 1m² (équivalent à 200 - 1000L/Ha).

Les carrés d'herbe traités sont pulvérisés avec une quantité totale d'eau, d'alcool benzylique et d'acide pélargonique de 40g (équivalent à 400L/Ha) dont 20g d'alcool benzylique (équivalent à 200L/Ha d'alcool benzylique pur) et 1g d'acide pélargonique (équivalent à 2,43L/Ha d'acide pélargonique pur).

Les carrés d'herbe contrôles reçoivent une quantité totale de 40g d'eau uniquement.

Les carrés d'herbe sont observés aux temps suivants T0, 6h, 24h, 48h, 72h, 96h, 120h, 144h, 168h.

Le pourcentage de la surface touchée et l'affaissement de l'herbe ont été évalués comme indiqué dans l'exemple 5.

### 1.2) Résultats

- Pourcentage de surface touchée : On observe un pourcentage maximal de surface touchée de 100% 48h après le traitement.
- Affaissement de l'herbe: 24h après le traitement, l'herbe présente un affaissement moyen de 30%.

Les résultats montrent que l'association de l'alcool benzylique avec l'acide pélargonique permet, d'une part, d'obtenir un effet plus rapide (durée diminuée de moitié), et, d'autre part, un effet plus étendu du fait de l'effet systémique de l'alcool benzylique, par rapport à l'acide pélargonique seul.

L'association des deux molécules permet notamment de :
- réduire les quantités respectives des deux molécules ;
- réduire le temps d'action ;
- réduire les coûts de produit.

### Essai n°2 : Alcool benzylique et vinaigre blanc

### 2.1) Protocole

Les essais en champs ont été réalisés sur des carrés d'herbes ayant une surface de 1m². On a utilisé de l'alcool benzylique pur (PanReac AppliChem - ITW Reagents) et du vinaigre blanc disponible commercialement.

Les essais et mesures d'activité sont réalisés comme décrit dans l'essai n°1 ci-dessus, excepté le fait que les carrés d'herbe traités sont pulvérisés avec une quantité totale d'eau, d'alcool benzylique et de vinaigre blanc de 40g (équivalent à 400L/Ha) dont 20g d'alcool benzylique (équivalent à 200L/Ha d'alcool benzylique pur) et 1g de vinaigre blanc (équivalent à 10L/Ha de vinaigre).

Les carrés d'herbe contrôles reçoivent une quantité totale de 40g d'eau uniquement.

### 2.2) Résultats

- Pourcentage de surface touchée : On observe un pourcentage maximal de surface touchée de 90% 48h après de traitement.
- Affaissement de l'herbe: 48h après le traitement, l'herbe présente un affaissement moyen de 30%.

Les résultats montrent que l'association de l'alcool benzylique avec le vinaigre permet, d'une part, d'obtenir un effet plus rapide (durée diminuée de moitié), et, d'autre part, un effet plus étendu du fait de l'effet systémique de l'alcool benzylique, par rapport au vinaigre seul.

L'association des deux molécules permet notamment de :
- réduire les quantités respectives des deux molécules ;
- réduire le temps d'action ;
- réduire les coûts de produit.

### Essai n°3 : Alcool benzylique et sel (chlorure de sodium)

### 3.1) Protocole

Les essais en champs ont été réalisés sur des carrés d'herbes ayant une surface de 1m². On a utilisé de l'alcool benzylique à 100% (PanReac AppliChem - ITW Reagents) et du sel disponible commercialement.

Les essais et mesures d'activité sont réalisés comme décrit dans l'essai n°1 ci-dessus, excepté le fait que les carrés d'herbe traités sont pulvérisés avec une quantité totale d'eau, d'alcool benzylique et de vinaigre blanc de 40g (équivalent à 400L/Ha) dont 20g d'alcool benzylique pur (équivalent à 200L/Ha d'alcool benzylique pur) et 1g de sel (équivalent à 10g/Ha de sel).

Les carrés d'herbe contrôles reçoivent une quantité totale de 40g d'eau uniquement.

### 3.2) Résultats

- Pourcentage de surface touchée : On observe un pourcentage maximal de surface touchée de 87% 48h après le traitement.
- Affaissement de l'herbe: 48h après le traitement, l'herbe présente un affaissement moyen de 30%.

### Exemple 7 : Activité préventive (anti-germination)

### 1) Protocole

Les essais ont été effectués sur des graines semées sur boîte de Pétri avec respectivement un mode contrôle, un essai avec l'alcool benzylique et un essai avec l'herbicide glyphosate (Gallup^{®} super 360, Barclay).

L'application du produit est effectuée avec un flacon pulvérisateur à gâchette qui permet de pulvériser 0,35g de produit par pulvérisation, en microgouttelettes.

Des graines sont déposées sur un gel d'agar en boites de Pétri. 16 graines d'orges, 24 graines de colza, 18 graines de blé, 10 graines de maïs, 10 graines de soja sont positionnées pour chaque test.

Les graines sont aspergées soit avec 0,35g d'eau (équivalent 700L/Ha) dont 0,35g d'acool benzylique pur (PanReac AppliChem - ITW Reagents) (équivalent 700L/Ha d'alcool benzylique pur), soit avec 0,35g d'eau pour le contrôle, soit avec 0,35g de glyphosate dilué à 0,5% pour le test glyphosate.

Les plantes sont observées à 0 et 11 jours. Le pourcentage de germination est le pourcentage de graines germées évalué après 11 jours.

### 2) Résultats

Le pourcentage de germination à 11 jours est rapporté dans le tableau 4 ci-dessous.

**Tableau 4**

| Plante (graine) | Alcool benzylique | Glyphosate | Contrôle |
|---|---|---|---|
| Orge | 0 | 100% | 100% |
| Colza | 0 | 100% | 100% |
| Blé | 0 | 100% | 100% |
| Pissenlit | 0 | 83% | 82% |
| Maïs | 0 | 100% | 100% |
| Soja | 0 | 100% | 100% |

Les résultats montrent que, 11 jours après semis, quelle que soit la famille végétale de la graine traitée, seules les graines traitées avec l'alcool benzylique n'ont pas germé, alors que les graines non traitées ou traitées avec le glyphosate ont germé.

Les graines testées appartiennent à différentes familles qui appartiennent aussi bien aux plantes monocotylédones qu'aux plantes dicotylédones.

Les résultats montrent que l'alcool benzylique bloque la germination des graines ou les tuent.

### Exemple 8 : activité herbicide en pré-levée

Les herbicides de pré-levée sont généralement appliqués peu de temps après le semis, mais avant l'émergence (levée) des premières plantules de la plante cultivée. Ils ne sont pas incorporés mécaniquement dans le sol. Le mécanisme d'action est basé sur le fait que les mauvaises herbes, dont des graminées, proviennent en général des couches supérieures du sol (< 50 mm). Les plantes cultivées sont semées à une profondeur plus importante. L'herbicide appliqué sur la couche supérieure du sol doit être lessivé par une légère aspersion.

La séparation spatiale de l'effet herbicide cantonné dans les couches supérieures du sol de la germination des cultures dans les couches inférieures augmente la sécurité.

L'application précoce dans le cycle des cultures permet une réduction de la compétition au profit de la plante cultivée.

### 1) Protocole

Les essais ont été effectués sur des plantes en pot.

On a utilisé l'alcool benzylique pur (PanReac AppliChem - ITW Reagents). L'application du produit est effectuée avec un flacon pulvérisateur à gâchette qui permet de pulvériser 1g de produit par pulvérisation en microgouttelettes. Des graines d'orges (50 graines par condition) sont semées dans du terreau à différentes profondeur (1,2 et 3cm). Ensuite, de l'alcool benzylique à 100% est vaporisé sur la terre (au-dessus des graines) à différentes concentrations (10, 25, 50, 100, 200, 300L/Ha).

L'état de germination est observé à 0 et 11 jours. Le pourcentage de germination est le pourcentage de graines germées évalué après 11 jours. Le pourcentage de graines germées dans chacune des conditions est déterminé et s'il est inférieur à 70%, l'utilisation en pré-levée est déconseillée.

### 2) Résultats

Les résultats sont donnés dans le tableau 5 ci-dessous.

La mention « Oui » indique que l'utilisation en pré-levée est préconisée. La mention « Non » indique que l'utilisation en pré-levée est déconseillée.

**Tableau 5**

| | Quantité d'alcool benzylique | | |
|---|---|---|---|
| Profondeur du semis | Inférieure à 50L/Ha | 50L/Ha | 100L/Ha |
| 1cm | oui | oui | non |
| 2cm | oui | oui | oui |
| 3cm | oui | oui | oui |

Les résultats montrent que l'utilisation en pré-levée est possible avec une concentration qui peut être modulée en fonction de la profondeur du semis.

### Exemple 9 : activité herbicide préventive par arrosage du sol

L'utilisation par arrosage permet de satisfaire les conditions imposées par le plan ECOPHYTO qui consiste à réduire les quantités de produits phytosanitaires.

Elle présente également l'avantage d'être utilisée de manière préventive sur les zones connues pour la croissance de certains adventices.

Des zones identifiées comme présentant chaque année la présence de chiendent, de graminées, de liserons et de chardons ont été traitées de manière préventive. La zone à traiter a été divisée en 5 parties afin de tester différents dosages de matière active (alcool benzylique pur), à savoir 50, 70, 110, 120 et 130 L/Ha.

Les résultats sont rapportés dans le tableau 6 ci-dessous, dans lequel la mention « oui » indique les zones où les plantes ont poussé malgré le traitement préventif, et la mention « non » indique les zones où le traitement préventif a permis d'éviter la pousse des plantes identifiées.

**Tableau 6**

| Plante | 50L/ha | 70L/Ha | 110L/Ha | 120L/Ha | 130L/Ha | 150L/Ha |
|---|---|---|---|---|---|---|
| Chiendent | oui | oui | oui | oui | non | non |
| Graminée | oui | oui | oui | non | non | non |
| Liseron | oui | oui | non | non | non | non |
| Chardon | oui | oui | non | non | non | non |

L'application foliaire usuelle pour ce type de plante étant en général de 300L/Ha, on observe une réduction de la quantité d'herbicide par espèce, comme indiqué dans le tableau 7 ci-dessous

**Tableau 7**

| Plante | Quantité d'herbicide usuel (foliaire) | Quantité d'alcool benzylique (arrosage) | % de réduction par rapport à un herbicide usuel |
|---|---|---|---|
| Chiendent | 300L/Ha | 130L/Ha | 56,7% |
| Graminée | 300L/Ha | 120L/Ha | 60% |
| Liseron | 300L/Ha | 110L/Ha | 63,4% |
| Chardon | 300L/Ha | 110L/Ha | 63,4% |

Les résultats montrent que l'application par arrosage permet de diviser par 2 en moyenne la quantité de produit utilisée.

De plus, le délai d'attente avant le prochain semis sera réduit en moyenne de 30%.

### Exemple 10 : activité herbicide en interculture

### 1) Protocole

On a utilisé l'alcool benzylique pur (PanReac AppliChem - ITW Reagents). Des graines d'orge et de colza sont semées dans du terreau 1, 2 3, 5, 6, 10, 13, 15, 20 jours après traitement du terreau à l'alcool benzylique pur à différentes concentrations (10L/Ha,50L/Ha, 100L/Ha, 200L/Ha, 300L/Ha, 400L/Ha, 500L/Ha, 600L/Ha). Le délai de semis est ensuite déterminé lorsque 70% des graines semées germent.

Les plantes sont observées à T0, 24h, 48h, 72h, 96h, 120h, 144h et 168h.

### 2) Résultats

Les résultats montrant le délai de semis en fonction de la dose utilisée sont rapportés dans le tableau 8 ci-dessous.

**Tableau 8**

| | Dose d'utilisation | | | | |
|---|---|---|---|---|---|
| | Inférieure à 100L/Ha | 100/LHa | 200L/Ha | 300L/Ha | Supérieure à 300L/Ha |
| Jours d'attente avant semis | 5 | 5 | 7 | 15 | 15 |

Les résultats montent qu'il est possible de moduler le délai de semis en fonction de la dose d'herbicide utilisée.

### Exemple 11 : activité herbicide en culture inter-rang

Certaines cultures, comme la vigne ou le maraichage, nécessitent de traiter inter-rang. Les éventuelles migrations aériennes ou par la terre de la molécule active sont susceptibles d'affecter les cultures adjacentes ont été testées.

### 1) Protocole

On a utilisé l'alcool benzylique pur (PanReac AppliChem - ITW Reagents). Deux plantes (Pétunia) ont été plantées avec un espace de 20cm. Une seule des plantes est traitée, soit en foliaire, soit en arrosage à différentes concentrations (10 L/Ha, 20 L/Ha, 50 L/Ha, 100 L/Ha, 200 L/Ha, 300 L/Ha, 40 L/Ha, 500 L/Ha, 600L/Ha). Les plantes sont observées à 0, 24h, 48h, 72h, 96h, 120h, 144h et 168h.

L'utilisation de l'herbicide sera possible lorsque la plante non traitée ne s'affaisse pas.

### 2) Résultats

Les résultats sont rapportés dans le tableau 9 ci-dessous, dans lequel la mention « oui » indique la dose et le mode d'utilisation lorsque l'utilisation en culture inter-rang est préconisée, et la mention « non » indique qu'elle ne l'est pas.

**Tableau 9**

| | | Quantité de produit utilisée | | | |
|---|---|---|---|---|---|
| | | Inférieure à 50L/Ha | 50L/Ha | 100L/Ha | 200L/Ha |
| Utilisation en inter rang | Arrosage | oui | oui | oui | non |
| | Foliaire | non | non | non | non |

Les résultats montrent que l'arrosage permet de moduler la quantité de produit utilisable en culture inter-rang.

### Exemple 12 : activité herbicide en synergie avec d'autres herbicides (inhibiteurs de synthèse moléculaire)

### Protocole

Les essais en champs ont été réalisés sur des carrés d'herbes ayant une surface de 1m². On a utilisé de l'alcool benzylique pur (PanReac AppliChem - ITW Reagents) et les co-herbicides aux concentrations indiquées ci-dessous. Les essais et mesures d'activité sont réalisés comme décrit dans l'essai n°1 de l'exemple 5, excepté le fait que les carrés d'herbe traités sont pulvérisés avec une quantité totale d'eau, d'alcool benzylique et de co-herbicide de 40g (équivalent à 400L/Ha) dont 20g d'alcool benzylique (équivalent à 200L/Ha d'alcool benzylique pur).

Les carrés d'herbe contrôles reçoivent une quantité totale de 40g d'eau uniquement.

Les essais de synergie ont été réalisés avec les herbicides suivants :
1. diflufénicanil, un inhibiteurs du PDS (Carat^{®} de Bayer, 1l/ha),
2. tembotrione, un inhibiteur 4-HPPD (Auxo^{®} de Bayer, 1,5l/ha),
3. aclonifène, un inhibiteur de synthèse DOXP (Challenge ^{®}, 2,5l/ha) ;
4. glyphosate, un inhibiteur de la voie de l'acide shikimique (,Gallup^{®} Super 360, Barclay, de 3 à 8l/ha) ;
5. acide benzoïque (Banvel 4S^{®} de Syngenta, 0,6l/ha)
6. les inhibiteurs de la division cellulaire (Antilope^{®} de Bayer, 0,6l/ha et DualGold^{®} de Syngenta, 1,5 à 2l/ha) ;
7. Sulfonylureas, un inhibiteur d'ALS (Adret ^{®} de Bayer, 1l/ha)
8. un inhibiteur de la synthèse des lipides (ACCase) (Tramat^{®} de Bayer - 1l/ha)
9. phenmédipham, un inhibiteur de la photosynthèse PS II (Betanal^{®} Booster de Bayer, 1l/ha).

Tous les essais ont été réalisés sur la base de 50% de la dose recommandée. les résultats sont rapportés dans le tableau 10 ci-dessous.

**Tableau 10**

| | **Produit testé** | | | | | | | | |
|---|---|---|---|---|---|---|---|---|---|
| | 1 | 2 | 3 | 4 | 5 | 6 | 7 | 8 | 9 |
| % d'efficacité en 1 jour | - | - | - | 40% | 50% | 50% | - | - | - |
| % d'efficacité en 2 jours | - | 20% | 35% | 60% | 80% | 60% | 50% | 30% | 20% |
| % d'efficacité en 3 jours | 80% | 50% | 60% | 100% | 100% | 100% | 80% | 50% | 40% |
| % d'efficacité en 4 jours | 100% | 100% | 100% | 100% | 100% | 100% | 100% | 80% | 100% |

Les résultats montrent que, lorqu'on associe les inhibiteurs de synthèse moléculaire testés avec l'alcool benzylique, on obtient une activité herbicide importante et précoce dans un délai en jours, qui est celui de l'alcool benzylique, et non en semaines, comme c'est le cas lorqu'on utiise les herbicides testés seuls.

### Exemple 13 : Action systémique par contact avec les feuilles

### 1) Protocole

Des graines de *Chenopodium album* (CHEAL) sont semées en boites de Pétri dans de la vermiculite humidifiée avec une solution de KNO₃ 0,2%. Les boites sont incubées en chambre climatique à 15°C/20°C nuit /jour et 14h de photopériode jusqu'au stade de l'émergence des cotylédons. Les plantules sont ensuite repiquées, à raison de 6 plantes par pot et 5 pots dans chacun des groupes (groupe traité et groupe contrôle), dans un mélange terre agricole :vermiculite (50 :50).

Les plantules sont cultivées dans les même conditions environnementales que précédemment jusqu'au stade BBCH12-14.

### 1.1) Traitement

Les plantes sont traitées avec de l'alcool benzylique au stade BBCH12-14 à la dose de 20L/ha d'alcool benzylique à 660g/l d'eau, soit 13,2kg d'alcool benzylique /ha.

Le produit est appliqué à un volume correspondant à 300L/ha à l'aide d'un banc de pulvérisation équipé de buses agricoles (Turbo Teejet TTII0015).

Après traitement, les plantes sont remises en culture en chambre climatique chambre climatique à 15°C/20°C nuit /jour et 14h de photopériode.

Un groupe contrôle n'est pas traité et reçoit uniquement de l'eau.

### 1.2) Protocole de marquage

On procède aux opérations suivantes :
a) sélection représentative d'au moins 2 plantules sur 2 pots différents ;
b) récupération de fragments racinaires ;
c) sections transversales au milieu d'une feuille complétement développée de chaque plantule ;
d) incubation des fragments racinaires et des sections de feuilles avec un fluorochrome révélateur de l'activité métabolique (fluorescence verte).

### 2) Résultats

Des observations en microscopie électronique ont été réalisées en microscopie à épifluorescence sur les feuilles et les racines des plantes traitées et des plantes contrôles, 24 h et 7 jours après traitement sur les feuilles.

En 24h, certaines plantes traitées présentent des symptômes de dessèchement allant de quelques taches à un dépérissement complet de la feuille et d'autres plantes ne présentent aucun symptôme visuel.

Sur les images de microscopie en épifluorescence, on observe sur les sections de feuille une diminution importante de la couleur verte, ce qui montre une forte réduction de l'activité métabolique des feuilles des plantes traitées par rapport aux plantes contrôles, qu'elles aient ou non des symptômes visibles sur les feuilles. On observe également sur les fragments racinaires une légère baisse de l'activité métabolique des racines des plantes traitées par rapport à celles des plantes contrôles, et ceci, alors même que les plantes traitées présentent des symptômes visibles ou n'en présentent pas.

7 jours après traitement, certaines des plantes traitées présentent des symptômes de dessèchement semblables à ceux observés à 24h et d'autres plantes n'en présentent pas.

Les observations au microscope confirment la baisse de l'activité métabolique des racines des plantes traitées par rapport aux plantes contrôles (diminution de la couleur verte). La réduction de l'activité métabolique des feuilles des plantes traitées s'accroit dans le temps, et ce, que les plantes aient des symptômes visibles ou n'en aient pas.

Les résultats observés sur les images de microscopie en épifluorescence sont rapportés dans les tableaux 11 et 12 ci-dessous, dans lesquels on a attribué une note de 0 à 5 en fonction de l'intensité et de la surface de la fluorescence observées, avec 0 = aucune activité métabolique, et 5 = activité métabolique complète.

Avant déracinement et analyse par microscopie en épifluorescence, les plantes traitées ont été réparties en 2 groupes :
- Groupe 1 : plantes ne présentant pas ou peu de symptômes de dessèchement sur la zone traitée (feuille)
- Groupe 2 : plantes présentant une feuille desséchée sur la zone traitée (feuille)

Les 2 groupes sont comparés au groupe contrôle (non traité).

**Tableau 11 : Activité métabolique sur les racines**

| | Groupe contrôle | Groupe 1 | Groupe 2 |
|---|---|---|---|
| 24h | 5 | 2 | 2,5 |
| 7 jours | 5 | 1,5 | 2 |

Les résultats montrent une diminution de l'activité métabolique au niveau des racines dans les plantes traitées, dès 24 h après le traitement.

**Tableau 12 : Activité métabolique sur les feuilles**

| | Groupe contrôle | Groupe 1 | Groupe 2 |
|---|---|---|---|
| 24h | 5 | 1 | 1 |
| 7 jours | 5 | 0,5 | 0 |

Les résultats montrent une forte diminution de l'activité métabolique au niveau des feuilles dans les plantes traitées, dès 24 h après le traitement.

### 3) Conclusion

Les résultats montrent que l'alcool benzylique utilisé en tant qu'herbicide à 20L/Ha provoque en 24h une baisse globale de l'activité métabolique des plantes traitées, toujours visible 7 jours après le traitement.

L'effet observé sur les racines après traitement par pulvérisation sur les feuilles montrent que l'alcool benzylique est systémique. En effet, l'alcool benzylique se diffuse à l'ensemble de la plante par ses organes de distribution avec un effet sur des organes éloignés de la zone de contact du produit, parfois même avant que les effets soient visibles sur la zone de contact.

### Exemple 14 : Activité herbicide en post-émergence précocoe, avec l'alcool benzylique utilisé seul ou en assocaition

### Protocole

Le sol est composé de 50% de sol agricole et 50% de vermiculite.

Les graines de moutarde sont semées en boite de Pétri jusqu'au stade émergence de la radicule. Les graines prégermées sont placées à 1 cm de profondeur dans des pots de 8 cm x 8 cm à raison de 5 graines par pot et 5 pots/répétitions par condition plantes traitées et plantes contrôles).

A l'apparition des cotylédons, le traitement est appliqué à l'aide d'un banc de pulvérisation simulant un traitement plein champ.

Les plantes sont traitées avec de l'alcool benzylique, seul ou en association, à 3 doses de matière active (30 L/ha, 40 L/ha et 60L/ha), respectivement diluées dans 200L d'eau. Le volume de pulvérisation de 200 L/ha.

Un contrôle non traité (eau uniquement) est ajouté.

Les conditions de culture sont de 15°C la nuit / 20°C le jour avec une photopériode de 14 heures (intensité lumineuse d'environ 300µmol/s/m²).

On effectue une notation visuelle des symptômes à 1, 3 et 7 jours après le traitement pour les plantes traitées. La valeur 0 correspond à une notation visuelle d'une plante semblable au contrôle et la valeur de 100 à la plante morte.

Chaque valeur est une moyenne calculée sur 5 pots par condition.

### Essai n°1 : Alcool benzylique seul

Les résultats sont donnés dans le tableau 13 ci-dessous.

**Tableau 13**

| Dose (L/ha) | 1 jour après traitement | 3 jours après traitement | 7 jours après le traitement |
|---|---|---|---|
| 0 (contrôle) | 0 | 0 | 0 |
| 30 | 3 | 21 | 81 |
| 40 | 59 | 82 | 93 |
| 60 | 63 | 92 | 100 |

### Essai n°2 : Alcool benzylique et benzoate de sodium

Le benzoate de sodium est utilisé à raison de 1,5% en poids du poids total de matière active (alcool benzylique + benzoate de sodium).

Les résultats sont donnés dans le tableau 14 ci-dessous.

**Tableau 14**

| Dose (L/ha) | 1 jour après traitement | 3 jours après traitement | 7 jours après le traitement |
|---|---|---|---|
| 0 (contrôle) | 0 | 0 | 0 |
| 30 | 4 | 25 | 37 |
| 40 | 49 | 82 | 93 |
| 60 | 63 | 99 | 100 |

Les résultats montrent une activité herbicide plus rapide (réduction du temps d'action) en comparaison avec l'alcool benzyilque utilisé seul.

### Essai n°3 : Alcool benzylique et acide salicylique

Les résultats sont donnés dans le tableau 15 ci-dessous.

L'acide salicylique est utilisé à raison de 3% en poids du poids total de matière active (alcool benzylique + acide salicylique).

**Tableau 15**

| Dose (L/ha) | 1 jour après traitement | 3 jours après traitement | 7 jours après le traitement |
|---|---|---|---|
| 0 (contrôle) | 0 | 0 | 0 |
| 30 | 24 | 34 | 67 |
| 40 | 63 | 78 | 100 |
| 60 | 73 | 100 | 100 |

Les résultats montrent que, dans les conditions testées, l'association d'alcool benzylique et d'acide salicylique permet l'obtention d'un effet herbicide supérieur à celui de l'alcool benzylique seul, notamment 7 jours après le traitement, à la dose de 40L /ha (mort des plantes).

### Essai n°4 : Alcool benzylique et lysozyme

Le lysozyme est utilisé à raison de 0,15% en poids du poids total de matière active (alcool benzylique + lysozyme).

Les résultats sont donnés dans le tableau 16 ci-dessous.

**Tableau 16**

| Dose (L/ha) | 1 jour après traitement | 3 jours après traitement | 7 jours après le traitement |
|---|---|---|---|
| 0 (contrôle) | 0 | 0 | 0 |
| 30 | 13 | 25 | 47 |
| 40 | 49 | 79 | 89 |
| 60 | 61 | 93 | 100 |

Les résultats montrent que, dans les conditions testées, l'association d'alcool benzylique et de lysozyme permet l'obtention d'un effet herbicide supérieur à celui de l'alcool benzylique seul, notamment 3 jours après le traitement, à la dose de 60L /ha.

### Essai n°5 : Alcool benzylique et alcool phénéthylique

L'alcool phénéthylique est utilisé à raison de 3% en poids du poids total de matière active (alcool benzylique + alcool phénéthylique).

Les résultats sont donnés dans le tableau 17 ci-dessous.

**Tableau 17**

| Dose (L/ha) | 1 jour après traitement | 3 jours après traitement | 7 jours après le traitement |
|---|---|---|---|
| 0 (contrôle) | 0 | 0 | 0 |
| 30 | 28 | 36 | 69 |
| 40 | 65 | 100 | 100 |
| 60 | 75 | 100 | 100 |

Les résultats montrent que, dans les conditions testées, l'association d'alcool benzylique et de lysozyme permet l'obtention d'un effet herbicide supérieur à celui de l'alcool benzylique seul, notamment 3 jours après le traitement, aux doses de 40L/ha et 60L /ha (mort des plantes).

## Revendications

1. Utilisation de l'alcool benzylique comme herbicide systémique.

2. Utilisation selon la revendication 1, dans laquelle l'alcool benzylique est la seule substance active.

3. Utilisation selon la revendication 1, dans laquelle l'alcool benzylique est utilisé en combinaison avec au moins un co-herbicide.

4. Utilisation selon la revendication 3, dans laquelle ledit co-herbicide est choisi parmi les inhibiteurs de la synthèse moléculaire, les inhibiteurs de la synthèse de cellulose, les inhibiteurs de la voie de l'acide shikimique, les inhibiteurs de la synthèse des auxines, les inhibiteurs de la division cellulaire, les inhibiteurs d'acétolactate synthase (ALS), les inhibiteurs de la 4-hydroxyphénylpyruvate dioxygénase (4-HPPD), les inhibiteurs de la phytoène désaturase (PDS), les inhibiteurs de la 1-désoxy-D-xylulose-5-phosphate-synthase (DOXP), les inhibiteurs de l'Acétylcoenzyme A carboxylase (ACCase) ou les inhibiteurs de du photosytème II (PS II).

5. Utilisation selon la revendication 3, dans laquelle ledit co-herbicide est un composé dépourvu d'activité herbicide qui permet d'accroitre et /ou de rendre plus rapide l'activité herbicide de l'alcool benzylique.

6. Utilisation selon l'une quelconque des revendications 3 à 5, dans laquelle la proportion pondérale entre l'herbicide alcool benzylique et le co-herbicide est comprise entre 150 :1 et 1 :150, de préférence entre 120 :1 et 1 :120, en particulier entre 100 :1 et 1 :100 ou entre 50 :1 et 1 :50, et notamment entre 20 :1 et 10 :1, en particulier entre 20 :1 et 5 :1.

7. Utilisation selon l'une quelconque des revendications 1 à 6, pour le contrôle des plantes nuisibles ou indésirables.

8. Utilisation selon l'une quelconque des revendications 1 à 7, dans laquelle l'activité herbicide est non-sélective.

9. Utilisation selon l'une quelconque des revendications 1 à 8, dans laquelle l'activité herbicide s'exerce par pénétration via les parties aériennes et/ou souterraines de la plante.

10. Utilisation selon l'une quelconque des revendications 1 à 8, dans laquelle l'activité herbicide est préventive.

11. Utilisation selon l'une quelconque des revendications 7 à 10, dans laquelle les plantes nuisibles ou indésirables sont choisies parmi l'ensemble des plantes de la lignée verte ou Archaeplastida, en particulier les plantes monocotylédones, les plantes dicotylédones et les ptéridophytes.

12. Utilisation selon l'une quelconque des revendications 1 à 11, qui est effectuée en post-émergence, sur la plantule (stade juvénile antérieur à la floraison), la plante en cours de floraison (avant, pendant ou après pollinisation), la plante après fécondation, la plante en cours de fructification, le fruit, les fleurs, les feuilles, les tiges, les racines ou dans le sol, et/ou le milieu de culture, avant ou après semis ou encore en interculture ou en inter-rangs.

13. Utilisation selon l'une quelconque des revendications 1 à 12, dans laquelle l'alcool benzylique est formulé, seul ou en association avec au moins un co-herbicide, dans une composition comprenant éventuellement au moins un adjuvant ou excipient acceptable en phytopharmacie, de préférence sous forme de solution aqueuse ou de solution ou suspension concentrée, de dispersion huileuse ou sous forme de microcapsules, de poudre ou de granulés.

14. Utilisation selon l'une quelconque des revendications 3, 4 ou 6 à 13, dans laquelle ledit co-herbicide est choisi parmi le glyphosate ou un de ses sels esters ou dérivés ; l'acide benzoïque ; l'acide pélargonique ; le dicamba ; l'acide 2,4-dichlorophénoxyacétique ; le benzoate de sodium, l'acide salicylique, le lysozyme, l'alcool phénéthylique et l'EDTA.

15. Utilisation de l'alcool benzylique comme herbicide, dans laquelle l'activité herbicide est préventive et empêche la germination ou la repousse de plantes issues de graines.

16. Utilisation selon la revendication 15, dans laquelle l'activité herbicide est préventive et empêche la germination des graines de végétaux nuisibles ou indésirables ou leur pré-émergence, ou en pré-levée en traitant la surface d'une zone cultivée préalablement semée en profondeur.

17. Utilisation selon l'une quelconque des revendications 15 et 16, dans laquelle l'alcool benzylique est la seule substance active.

18. Utilisation selon l'une quelconque des revendications 15 et 16, dans laquelle l'alcool benzylique est utilisé en combinaison avec au moins un co-herbicide.

## Patentansprüche

1. Verwendung von Benzylalkohol als systemisches Herbizid.

2. Verwendung nach Anspruch 1, wobei Benzylalkohol der einzige Wirkstoff ist.

3. Verwendung nach Anspruch 1, wobei Benzylalkohol in Kombination mit mindestens einem Co-Herbizid verwendet wird.

4. Verwendung nach Anspruch 3, wobei das Co-Herbizid aus den Inhibitoren der molekularen Synthese, den Inhibitoren der Cellulosesynthese, den Inhibitoren des Shikimisäurewegs, den Inhibitoren der Auxinsynthese, den Inhibitoren der Zellteilung, den Inhibitoren der Acetolactatsynthase (ALS), den 4-Hydroxyphenylpyruvat-Dioxygenase(4-HPPD)-Inhibitoren, den Phytoen-Desaturase(PDS)-Inhibitoren, den 1-Desoxy-D-xylulose-5-phosphat-Synthase(DOXP)-Inhibitoren, den Acetyl-Coenzym-A-Carboxylase(ACCase)-Inhibitoren oder den Photosystem II(PS II)-Inhibitoren ausgewählt ist.

5. Verwendung nach Anspruch 3, wobei das Co-Herbizid eine Verbindung ohne herbizide Wirkung ist, die es ermöglicht, die herbizide Wirkung von Benzylalkohol zu erhöhen und/oder zu beschleunigen.

6. Verwendung nach einem der Ansprüche 3 bis 5, wobei das Gewichtsverhältnis zwischen dem Herbizid Benzylalkohol und dem Co-Herbizid zwischen 150:1 und 1:150, vorzugsweise zwischen 120:1 und 1:120, insbesondere zwischen 100:1 und 1:100 oder zwischen 50:1 und 1:50 und vor allem zwischen 20:1 und 10:1, ganz besonders zwischen 20:1 und 5:1 liegt.

7. Verwendung nach einem der Ansprüche 1 bis 6 zur Bekämpfung schädlicher oder unerwünschter Pflanzen.

8. Verwendung nach einem der Ansprüche 1 bis 7, wobei die herbizide Wirkung nicht selektiv ist.

9. Verwendung nach einem der Ansprüche 1 bis 8, wobei die herbizide Wirkung durch Penetration über die oberirdischen und/oder unterirdischen Teile der Pflanze erfolgt.

10. Verwendung nach einem der Ansprüche 1 bis 8, wobei die herbizide Wirkung präventiv ist.

11. Verwendung nach einem der Ansprüche 7 bis 10, wobei die schädlichen oder unerwünschten Pflanzen aus allen Pflanzen der grünen Linie oder Archaeplastida, insbesondere einkeimblättrigen Pflanzen, zweikeimblättrigen Pflanzen und Pteridophyten, ausgewählt sind.

12. Verwendung nach einem der Ansprüche 1 bis 11, die im Nachauflauf an dem Sämling (Jugendstadium vor der Blüte), der blühenden Pflanze (vor, während oder nach der Bestäubung), der Pflanze nach der Befruchtung, der Pflanze während der Fruchtbildung, den Früchten, den Blüten, den Blättern, den Stängeln, den Wurzeln oder in dem Boden und/oder dem Kulturmedium, vor oder nach der Aussaat oder auch Zwischenfrucht oder Zwischenreihe durchgeführt wird.

13. Verwendung nach einem der Ansprüche 1 bis 12, wobei Benzylalkohol allein oder in Kombination mit mindestens einem Co-Herbizid in einer Zusammensetzung formuliert wird, die gegebenenfalls mindestens einen phytopharmazeutisch akzeptablen Hilfsstoff oder Trägerstoff umfasst, vorzugsweise in Form einer wässrigen Lösung oder einer konzentrierten Lösung oder Suspension, einer öligen Dispersion oder in Form von Mikrokapseln, Pulver oder Pellets.

14. Verwendung nach einem der Ansprüche 3, 4 oder 6 bis 13, wobei das Co-Herbizid aus Glyphosat oder einem seiner Estersalze oder seinen Derivaten; Benzoesäure; Pelargonsäure; Dicamba; 2,4-Dichlorphenoxyessigsäure; Natriumbenzoat, Salicylsäure, Lysozym, Phenethylalkohol und EDTA ausgewählt ist.

15. Verwendung von Benzylalkohol als Herbizid, wobei die herbizide Wirkung präventiv ist und das Keimen oder das Austreiben von aus Samen gewachsenen Pflanzen verhindert.

16. Verwendung nach Anspruch 15, wobei die herbizide Wirkung präventiv ist und das Keimen von Samen schädlicher oder unerwünschter Pflanzen oder deren Vorauflaufen oder vor dem Auflaufen verhindert, indem die Oberfläche einer zuvor in der Tiefe gesäten Anbaufläche behandelt wird.

17. Verwendung nach einem der Ansprüche 15 bis 16, wobei Benzylalkohol der einzige Wirkstoff ist.

18. Verwendung nach einem der Ansprüche 15 bis 16, wobei Benzylalkohol in Kombination mit mindestens einem Co-Herbizid verwendet wird.

## Claims

1. Use of benzyl alcohol as a systemic herbicide.

2. Use according to claim 1, in which benzyl alcohol is the only active substance.

3. Use according to claim 1, in which benzyl alcohol is used in combination with at least one co-herbicide.

4. Use according to claim 3, in which said co-herbicide is selected from the molecular synthesis inhibitors, the cellulose synthesis inhibitors, the shikimic acid pathway inhibitors, the auxine synthesis inhibitors, the cellular division inhibitors, the acetolactate synthase (ALS) inhibitors, the 4-hydroxyphenylpyruvate dioxygenase (4-HPPD) inhibitors, the phytoene desaturase (PDS) inhibitors, the 1-deoxy-D-xylulose-5-phosphate synthase (DOXP) inhibitors, the acetyl coenzyme A carboxylase (ACCase) inhibitors or the photosystem II (PS II) inhibitors.

5. Use according to claim 3, in which said co-herbicide is a compound without herbicide activity which makes it possible to increase and/or to speed up the herbicide activity of benzyl alcohol.

6. Use according to any one of claims 3 to 5, in which the weight ratio between the herbicide benzyl alcohol and the co-herbicide is comprised between 150:1 and 1:150, preferably between 120:1 and 1:120, in particular between 100:1 and 1:100 or between 50:1 and 1:50, and in particular between 20:1 and 10:1, in particular between 20:1 and 5:1.

7. Use according to any one of claims 1 to 6, for controlling noxious or undesirable plants.

8. Use according to any one of claims 1 to 7, in which the herbicide activity is non-selective.

9. Use according to any one of claims 1 to 8, in which the herbicide activity is carried out through penetration via the above-ground and/or underground parts of the plant.

10. Use according to any one of claims 1 to 8, in which the herbicide activity is preventative.

11. Use according to any one of claims 7 to 10, in which the noxious or undesirable plants are selected from all of the plants of the green lineage or Archaeplastida, in particular monocotyledon plants, dicotyledon plants and pteridophytes.

12. Use according to any one of claims 1 to 11, which is carried out post-emergence, on the plantlet (juvenile stage before flowering), the flowering plant (before, during or after pollination), the plant after fertilization, the plant during fructification, the fruit, the flowers, the leaves, the stems, the roots or in the soil, and/or the culture medium, before or after seeding or also intercrop or inter-row.

13. Use according to any one of claims 1 to 12, in which benzyl alcohol is formulated, alone or in combination with at least one co-herbicide, in a composition optionally comprising at least one phytopharmaceutically acceptable additive or excipient, preferably in the form of an aqueous solution or a concentrated solution or suspension, an oily dispersion or in the form of microcapsules, powder or pellets.

14. Use according to any one of claims 3, 4 or 6 to 13, in which said co-herbicide is selected from glyphosate or one of its ester salts or its derivatives; benzoic acid; pelargonic acid; dicamba, 2,4-dichlorophenoxyacetic acid, sodium benzoate, salicylic acid, lysozyme, phenethyl alcohol and EDTA.

15. Use of benzyl alcohol as a herbicide, in which the herbicide activity is preventative and prevents plants originating from seeds from germinating or from sprouting again.

16. Use according to claim 15, in which the herbicide activity is preventative and prevents the germination of noxious or undesirable plant seeds or their pre-emergence, by treating the surface of a previously deeply seeded cultivated area.

17. Use according to any one of claims 15 and 16, in which benzyl alcohol is the only active substance.

18. Use according to any one of claims 15 and 16, in which benzyl alcohol is used in combination with at least one co-herbicide.
